(19) Europäisches Patentamt
European Patent Office
Office européen des brevets

(11) EP 1 237 015 A1

(12) EUROPEAN PATENT APPLICATION
published in accordance with Art. 158(3) EPC

(43) Date of publication:
**04.09.2002 Bulletin 2002/36**

(21) Application number: **01955594.5**

(22) Date of filing: **08.08.2001**

(51) Int Cl.[7]: **G02B 1/04**, G02C 7/04,
C08G 73/10, A61F 2/16

(86) International application number:
**PCT/JP01/06820**

(87) International publication number:
**WO 02/012926 (14.02.2002 Gazette 2002/07)**

(84) Designated Contracting States:
**AT BE CH CY DE DK ES FI FR GB GR IE IT LI LU MC NL PT SE TR**

(30) Priority: **09.08.2000 JP 2000241371**
**09.08.2000 JP 2000241372**
**02.04.2001 JP 2001103843**

(71) Applicant: **Mitsui Chemicals, Inc.**
**Tokyo 100-6070 (JP)**

(72) Inventors:
- **OKAWA, Yuichi**
  **Sodegaura-shi, Chiba 299-0265 (JP)**
- **SAKATA, Yoshihiro**
  **Sodegaura-shi, Chiba 299-0265 (JP)**
- **ONO, Takashi**
  **Sodegaura-shi, Chiba 299-0265 (JP)**
- **TAMAI, Shoji**
  **Sodegaura-shi, Chiba 299-0265 (JP)**

(74) Representative: **Strehl Schübel-Hopf & Partner**
**Maximilianstrasse 54**
**80538 München (DE)**

# (54) OPTICAL MEMBERS MADE OF POLYIMIDE RESINS

(57) For providing a polyimide optical component exhibiting good physical properties inherent to a polyimide, i.e., heat resistance, mechanical properties, electric properties, thermal oxidation stability and chemical resistance, as well as good transparency and a high refractive index, this invention, this invention essentially uses a particular diamine and a particular tetracarboxylic dianhydride to give an optical component made of a polyimide having a motif represented by general formula (1):

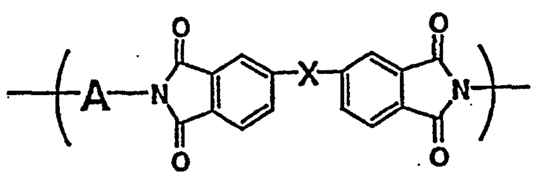

(1)

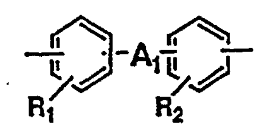

(2)

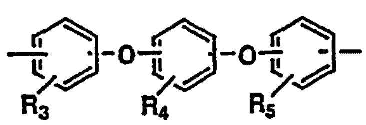

(3)

EP 1 237 015 A1

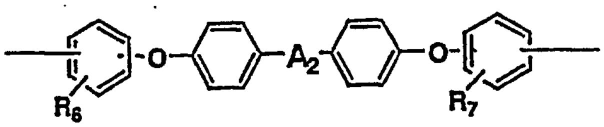

(4)

wherein in general formula (1), A represents general formula (2), (3) or (4); X represents a direct bond, -O-, $-SO_2-$ or $-C(CF_3)_2-$;

in general formula (2), $R_1$ and $R_2$ represent H, Cl, Br, $CH_3$ or $CF_3$;
in general formula (3), $A_1$ represents -O-, -S-, -CO-, $-CH_2-$, $-SO_2-$, $-C(CH_3)_2-$ or $-C(CF_3)_2-$;
in general formula (4), $A_2$ represents a direct bond, -O-, -S-, -CO-, $-SO_2-$, $-C(CH_3)_2-$ or $-C(CF_3)_2-$.

## Description

BACKGROUND OF THE INVENTION

1. Field of the Invention

This invention relates to optical components such as an optical lens, an intraocular lens, a microlens and an optical filter made of a polyimide resin. Optical components such as a lens and a microlens made of a polyimide according to this invention exhibit good physical properties inherent to a polyimide, i.e., heat resistance, mechanical properties, electric properties, thermal oxidation stability, chemical resistance and radiation resistance, as well as transparency, a low birefringence and a high refractive index required as an optical component.

2. Description of the Prior Art

Various inorganic glasses have been conventionally used as an optical lens material. As eyeglasses have been widespread, needs for a lighter and thinner lens have promoted development of a glass lens with a higher refractive index for eyeglasses. However, since a glass lens is heavy and fragile, a lighter and robuster lens has been needed.

On the other hand, a plastic optical component is light and robust; exhibits good formability; and can be produced in a large scale so that it has been increasingly demanded for a variety of optical components. Plastic optical materials include transparent resins such as poly(methyl methacrylate) resins, polystyrene resins and polycarbonates.

In addition to an eyeglass lens, plastic optical materials have been expected to be used in various applications such as a microlens in, e.g., promising optical information communication or a liquid crystal projector, a coating material for an optical device and a matching or core material for an optical fiber. A process for manufacturing such a product often has a processing step requiring heat resistance at 150 °C or higher. Any of the above transparent resins such as poly(methyl methacrylate), polystyrene and polycarbonate resins, however, has a glass transition temperature (Tg) of 150 °C or less, i.e., is less heat-resisting, and is, therefore, less stable in a high-temperature range.

Known highly heat-resisting engineering plastics are polyimides. Conventional polyimides can exhibit good heat resistance and a higher refractive index, but are yellow- or brown-colored and has a higher birefringence. For example, polyimides described in JP-A 8-504967 are used as an optical component, but have a birefringence of at least an order of 0.01, which is inadequate. In addition, "PHOTOSENSITIVE POLYIMIDE - Fundamentals and Applications", edited by KAZUYUKI HORIE and TAKASHI YAMASHITA, TECHNOMIC PUBLISHING COMP., p.300 (1995) has shown that a birefringence is at least 0.1 for commercially available polyimides and an order of 0.01 even for a special fluorinated polyimide, Thus, heat resistance can be significantly improved, but as described above, their use as an optical lens such as a lens and a microlens is considerably limited.

Recently; a microlens has been used in many types of optical devices for improving an efficiency for light utilization; for example, a projection-type liquid-crystal projector.

Conventional large-screen TVs used, e.g., for presentation or in a public lounge include direct-view large CRT, projection-type CRT projectors and projection-type liquid-crystal projector. However, for CRTs, image quality is not good due to dark display in a bright place and poor contrast. For projection-type liquid-crystal projectors, a bright light source is used for solving these problems, but shields for shielding light from a light-source lamp are placed, for example, between pixels for displaying an image and a TFT for operating liquid crystal. The shields cause an optical loss, leading to insufficient utilization of source light.

Thus, a microlens has been devised to effectively utilize light cut by, e.g., shields for improving an efficiency for light utilization. Microlenses are disposed to individual pixels in liquid crystal for significantly improve an efficiency for light utilization. Microlenses in which a lens is made of glass have been already commercially available. The following problems have been, however, indicated in relation to the use of such glass microlenses.

During producing a liquid-crystal panel equipped with microlenses, the surfaces of the microlenses must be flattened for preventing defective gap or leveling between substrates facing each other and for improving display quality in liquid crystal as described in JP-A 11-24059. Flattening is conducted by coating the surface of the microlens or attaching a cover glass with an adhesive. Attaching a cover glass may cause light loss due to light reflection on the surface of the cover glass, and a coating process is, therefore, desirable.

For using a glass as a microlens, the glass must be coated with a material with a low refractive index. The difference in a refractive index between the glass microlens and the coating material allows the glass to act as a lens. Coating materials which may be used include generally highly transparent resins, i.e., poly(methyl methacrylates) (PMMAS), polystyrenes (PSs) and polycarbonates (PCs) and overcoating materials with a low refractive index. A glass for a lens generally has a refractive index of about 1.54 to 1.62. On the other hand, a refractive index for a transparent resin is 1.49 for a PMMA, 1.59 for a PS or 1.58 for a PC, which is relatively closer to that of a glass, resulting in

insufficient performance as a lens. A resin with a low refractive index for overcoating exhibits insufficient heat resistance and even any highly transparent resin has a glass transition temperature of 150 °C or less and thus it cannot endure a temperature to which the resin is exposed during constructing or attaching a liquid-crystal panel on a microlens substrate.

On the other hand, a resin may be used as a lens by using a glass as a low refractive-index material while using the resin as a high refractive-index material.

There have been a variety of suggestions for producing a resin microlens. Thermal deformation is believed to be practical as disclosed in JP-A 6-194502. Thermal deformation is a process for producing a microlens by forming a thermoplastic photosensitive material film on a substrate; patterning it according to a pattern corresponding to the shape of the microlens and its alignment; heating the photo-patterned photosensitive material film at a thermal deforming temperature; forming a refraction plane utilizing the thermal deformation temperature and a surface tension of the photosensitive material; and then solidifying the film.

In this process, a lens used itself exhibits a low thermal deformation temperature so that a high-energy light flux cannot be used because the lens itself becomes soft due to overheating of the lens. High-energy light cannot be, therefore, used. Furthermore, this process cannot provide interconnected microlenses which are desirable in the light of efficient utilization of light.

Polyimides are known to be highly heat-resisting resins, and colorless and transparent polyimides have been disclosed in JP-As 61-141732, 62-13436, 62-57421 and 63-170420. It has been recognized that polyimides cannot be used as an optical material because they are generally brown- or yellow-colored. However, as shown in the above patent publications, a particular structure may be used to improve their colorlessness and transparency.

JP-As 63-226359, 63-252159, 1-313058, 3-155868 and 6-190942 have described that a polyimide can be used in lens applications if its color is reduced because it has a higher refractive index. Any of the applications is, however, for an eyeglass lens or intraocular lens, but not for a microlens. A microlens is significantly different from an eyeglass or intraocular lens in terms of a size and a method of use.

Furthermore, the polyimides described in the above patent applications are fluorine-containing polyimides, which is less resistant to an organic solvent. When using a polyimide in an application such as a microlens, there may occur problems in relation to its resistance to chemicals including a variety of chemicals used in, for example, an etchant, a plating liquid or a photoresist liquid.

Another optical component is an optical filter. A colored layer for a color filter used in a liquid-crystal display device may be formed by a known process such as staining, pigment dispersion, electrodeposition and printing. For a colored resin material used in pigment dispersion, it is known that an organic or inorganic pigment is used as a coloring agent while a resin is, for example, a polyimide, PVA, acrylic or epoxy resin. Among these, a polyimide resin is known to be useful as a color filter because it is highly heat-resisting and reliable and is thus less discolored during depositing a transparent electrode or heating an oriented film (See JP-AS 60-184202 and 60-184203). A highly transparent polyimide for an optical filter is insufficiently chemical resistant as is for a microlens.

Another optical component is an intraocular lens. Transplantation of an artificial lens, i.e., an intraocular lens has been used for improving visual acuity in a patient with aphakia after lensectomy due to, for example, cataract.

Natural light contains wavelengths in the ranges of ultraviolet, visible and infrared light. Transmission of a large amount of UV rays into an eye may, therefore, cause a retinal disorder. A lens eye protects retina by preferentially absorbing UV rays. Transmission of UV rays may, therefore, become a significant problems in aphakia described above. It is thus desired that the intraocular lens is made of a material capable of absorbing UV rays in the range of 200 to 380 nm and transparent to visible light in the range of 380 to 780 nm. Furthermore, since a heavy intraocular lens may be burdensome for an eye, it is desired that the material essentially has a low specific gravity and a large refractive index for reducing a lens thickness as much as possible.

Thus, an objective of this invention is to provide a polyimide optical component with higher heat resistance such as a lens exhibiting good physical properties inherent to a polyimide such as good heat resistance, mechanical properties, sliding properties, low water absorptivity, electric properties, chemical resistance and radiation resistance, which is significantly improved in transparency, a low birefringence and a high refractive index. Another objective of this invention is to provide a colorless and transparent polyimide microlens with good heat resistance which can solve the problem of a small difference in a refractive index between it and a coating material in a conventional glass microlens, without the problem of deformation by high-energy light in a resin microlens.

## SUMMARY OF THE INVENTION

We have intensely attempted to solve the above problems, and have finally found that a polyimide prepared from a particular aromatic diamine and a particular tetracarboxylic dianhydride exhibits not only good physical properties inherent to a polyimide but also good transparency, a low birefringence and a high refractive index so that it can be used as an excellent optical component, achieving this invention.

Specifically, this invention provides the followings.

(a) An optical component prepared using a polyimide resin essentially comprising a structural motif represented by general formula (1):

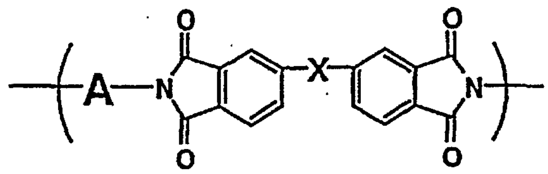
(1)

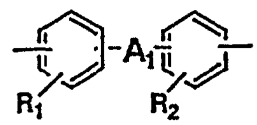
(2)

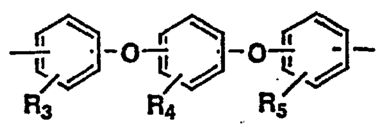
(3)

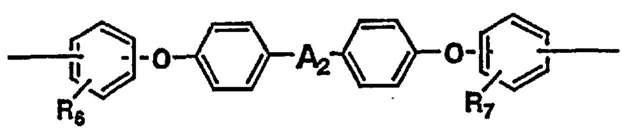
(4)

wherein

in general formula (1), A represents general formula (2), (3) or (4); X represents a direct bond, -O-, $-SO_2-$ or $-C(CF_3)_2-$;
in general formula (2), $A_1$ represents a direct bond, -O-, -S-, $-SO_2-$, -CO-, $-C(CH_3)_2-$ or $-C(CF_3)_2-$; and in general formula (2) $R_1$ and $R_2$ independently represent H, Cl, Br, $CH_3$ or $CF_3$;
in general formula (3), $R_3$, $R_4$ and $R_5$ independently represent H, Cl, Br, CN, $CH_3$ or $CF_3$;
in general formula (4), $A_2$ represents a direct bond, -O-, -S-, $-SO_2-$, -CO-, $-C(CH_3)_2-$ or $-C(CF_3)_2-$; and in general formula (4), $R_6$ and $R_7$ represent H or $CF_3$.

(b) The optical component as described in (a) comprising the polyimide resin represented by general formula (1) in (a) whose polymer end is capped with a structure represented by general formula (5) or (6):

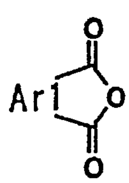
(5)

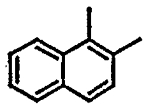, 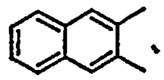, 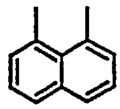, 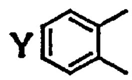 (I)

H-, F-, Cl-, Br-, NO2-, CN-, CH3-, CF3-, CH3O-
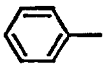, 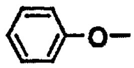, 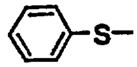, 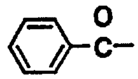, 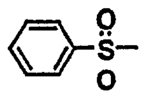 (II)

$$Ar2—NH_2. \quad (6)$$

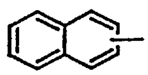 or 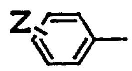 (III)

H-, F-, Cl-, Br-, NO2-, CN-, CH3-, CF3-, CH3O-
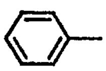, 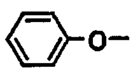, 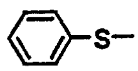, 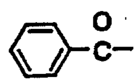, 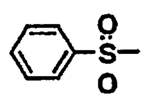 (IV)

wherein in general formula (5), Ar1 is selected from the group in formula (I); and Y is selected from the group in formula (II);

in general formula (6), Ar2 is selected from the group in formula (III); and Z is selected from the group in formula (IV).

(c) The optical component as described in (a) comprising the polyimide resin represented by general formula (1) in (a) whose polymer end is capped with a structure represented by general formula (7) or (8), to which a crosslinking structure can be introduced:

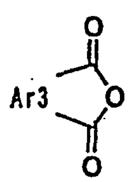 (7)

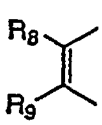, 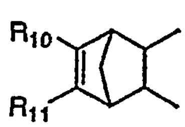, 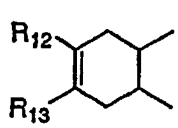, 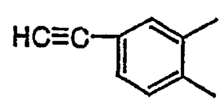 (V)

Ar4-NH2 (8)

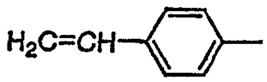 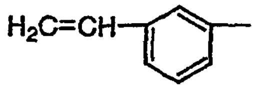 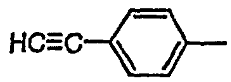 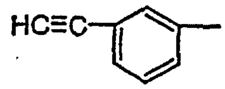 (VI)

wherein

in general formula (7), Ar3 is selected from the group in formula (V);
in formula (V), $R_8$ to $R_{13}$ may be the same or different and independently represent H, F, $CF_3$, $CH_3$, $C_2H_5$ or phenyl;
in general formula (8), Ar4 is selected from the group in formula (VI).

(d) The optical component as described in any of (a) to (c) wherein the optical component is a microlens.
(e) The optical component as described in (c)
wherein the optical component is selected from the group consisting of an optical lens, an intraocular lens and a microlens.
(f) An optical component prepared using a polyimide resin essentially comprising a structural motif represented by general formula (9):

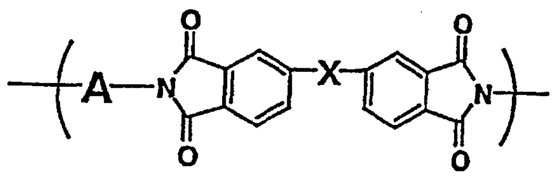 (9)

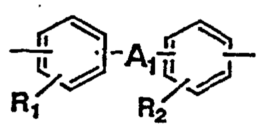 (10)

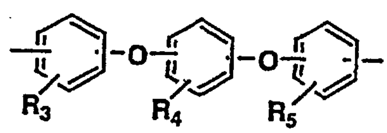 (11)

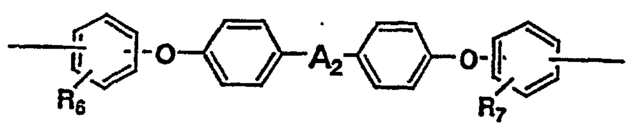 (12)

wherein

in general formula (9), A represents general formula (10), (11) or (12); X represents a direct bond, -O-, $-SO_2-$ or $-C(CF_3)_2-$;
in general formula (10), $A_1$ represents a direct bond, -O-, -S-, $-SO_2-$, -CO-, $-C(CH_3)_2-$ or $-C(CF_3)_2-$; and in general formula (10) $R_1$ and $R_2$ independently represent Cl, Br, $CH_3$ or $CF_3$;
in general formula (11), $R_3$, $R_4$ and $R_5$ independently represent H, Cl, Br, CN, $CH_3$ or $CF_3$; and at least one of $R_3$, $R_4$ and $R_5$ represents a group other than H;
in general formula (12), $A_2$ represents a direct bond, -O-, -S-, $-SO_2-$, -CO-, $-C(CH_3)_2-$ or $-C(CF_3)_2-$; and in general formula (12), $R_6$ and $R_7$ represent $CF_3$.

(g) The optical component as described in (f) wherein the optical component is selected from the group consisting of an optical lens, a microlens, an intraocular lens and an optical filter.

(h) An optical component selected from the group consisting of an optical lens, a microlens, an intraocular lens and an optical filter produced using a polyimide resin having the structure described in (b) and/or (c) wherein at least one of $R_3$, $R_4$ and $R_5$ represents a group other than H.

DETAILED DESCRIPTION OF PREFERRED EMBODIMENTS

we have found in this invention that the polyimide represented by general formula (1) is suitable for an optical component such as an optical lens, an intraocular lens, a microlens and an optical filter.

The polyimide represented by general formula (1) can be prepared by dehydrating condensation of a diamine represented by general formula (13), (14) or (15):

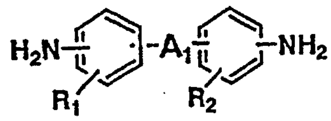

(13)

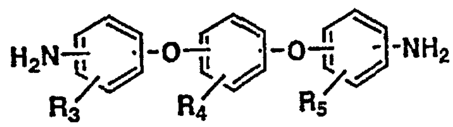

(14)

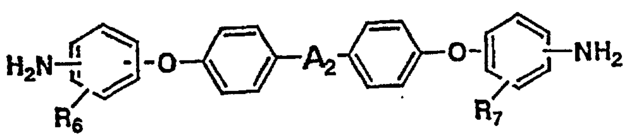

(15)

wherein

in general formula (13), $A_1$ represents -O-, -S-, $-SO_2-$, -CO-, $-C(CH_3)_2-$ or $-C(CF_3)_2-$; and in general formula (13) $R_1$ and $R_2$ independently represent H, Cl, Br, $CH_3$ or $CF_3$; and preferably at least one of $R_1$ and $R_2$ represents a group other than H;

in general formula (14), $R_3$, $R_4$ and $R_5$ independently represent H, Cl, Br, CN, $CH_3$ or $CF_3$; and preferably in general formula (14), at least one of $R_3$, $R_4$ and $R_5$ represents a group other than H;

in general formula (15), $A_2$ represents a direct bond, -O-, -S-, $-SO_2-$, -CO-, $-C(CH_3)_2-$ or $-C(CF_3)_2-$; and in general formula (15), $R_6$ and $R_7$ represent H or $CF_3$, preferably $CF_3$, with a tetracarboxylic dianhydride represented by general formula (16):

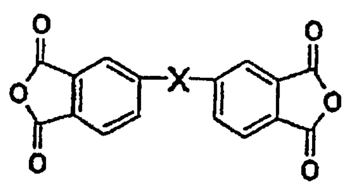

(16)

wherein X represents a direct bond, -O-, $-SO_2-$ or $-C(CF_3)_2-$, in a solvent.

Diamine

A diamine used in preparing a polyimide resin according to this invention will be described.

Examples of the diamine represented by general formula (13) include:

(1-1) those in which $A_1$ is a direct bond such as 4,4'-diamino-2,2'-dichlorobiphenyl, 4,4'-diamino-2,2'-dibromobiphenyl, 4,4'-diamino-2,2'-dicyanobiphenyl, 4,4'-diamino-2,2'-dimethylbiphenyl, 4,4'-diamino-3,3'-dimethylbiphenyl and 4,4'-diamino-2,2'-ditrifluoromethylbiphenyl;

(1-2) those in which $A_1$ is -O- such as 4,4'-diaminodiphenyl ether, 3,4'-diaminodiphenyl ether, 3,3'-diaminodiphenyl ether, 4,4'-diamino-2-trifluoromethyldiphenyl ether, 4,4'-diamino-3-trifluoromethyldiphenyl ether, 4,4'-diamino-2,2'-ditrifluoromethyldiphenyl ether, 4,4'-diamino-2,3'-ditrifluoromethyldiphenyl ether, 4,4'-diamino-3,3'-ditrifluoromethyldiphenyl ether, 3,4'-diamino-5-trifluoromethyldiphenyl ether, 3,4'-diamino-2'-trifluoromethyldiphenyl ether, 3,4'-diamino-3'-trifluoromethyldiphenyl ether, 3,4'-diamino-5,2'-ditrifluoromethyldiphenyl ether, 3,4'-diamino-5,3'-ditrifluoromethyldiphenyl ether, 3,3'-diamino-5-trifluoromethyldiphenyl ether, 3,3'-diamino-5,5'-ditrifluoromethyldiphenyl ether, 4,4'-diamino-2-methyldiphenyl ether, 4,4'-diamino-3-methyldiphenyl ether, 4,4'-diamino-2,2'-dimethyldiphenyl ether, 4,4'-diamino-2,3'-dimethyldiphenyl ether, 4,4'-diamino-3,3'-dimethyldiphenyl ether, 3,4'-diamino-5-methyldiphenyl ether, 3,4'-diamino-2'-methyldiphenyl ether, 3,4'-diamino-3'-methyldiphenyl ether, 3,4'-diamino-5,2'-dimethyldiphenyl ether, 3,4'-diamino-5,3'-dimethyldiphenyl ether, 3,3'-diamino-5-methyldiphenyl ether, 3,3'-diamino-5,5'-dimethyldiphenyl ether, 4,4'-diamino-2-bromodiphenyl ether, 4,4'-diamino-3-bromodiphenyl ether, 4,4'-diamino-2,2'-dibromodiphenyl ether, 4,4'-diamino-2,3'-dibromodiphenyl ether, 4,4'-diamino-3,3'-dibromodiphenyl ether, 3,4'-diamino-5-bromodiphenyl ether, 3,4'-diamino-2'-bromodiphenyl ether, 3,4'-diamino-3'-bromodiphenyl ether, 3,4'-diamino-5,2'-dibromodiphenyl ether, 3,4'-diamino-5,3'-dibromodiphenyl ether, 3,3'-diamino-5-bromodiphenyl ether 3,3'-diamino-5,5'-dibromodiphenyl ether, 4,4'-diamino-2-chlorodiphenyl ether, 4,4'-diamino-3-chlorodiphenyl ether, 4,4'-diamino-2,2'-dichlorodiphenyl ether, 4,4'-diamino-2,3'-dichlorodiphenyl ether, 4,4'-diamino-3,3'-dichlorodiphenyl ether, 3,4'-diamino-5-chlorodiphenyl ether, 3,4'-diamino-2'-chlorodiphenyl ether, 3,4'-diamino-3'-chlorodiphenyl ether, 3,4'-diamino-5,2'-dichlorodiphenyl ether, 3,4'-diamino-5,3'-dichlorodiphenyl ether, 3,3'-diamino-5-chlorodiphenyl ether and 3,3'-diamino-5,5'-dichlorodiphenyl ether;

(1-3) those in which $A_1$ is -S- such as 4,4'-diaminodiphenylsulfide, 3,4'-diaminodiphenylsulfide, 3,3'-diaminodiphenylsulfide, 4,4'-diamino-2-trifluoromethyldiphenylsulfide, 4,4'-diamino-3-trifluoromethyldiphenylsulfide, 4,4'-diamino-2,2'-ditrifluoromethyldiphenylsulfide, 4,4'-diamino-2,3'-ditrifluoromethyldiphenylsulfide, 4,4'-diamino-3,3'-ditrifluoromethyldiphenylsulfide, 3,4'-diamino-5-trifluoromethyldiphenylsulfide, 3,4'-diamino-2'-trifluoromethyldiphenylsulfide, 3,4'-diamino-3'-trifluoromethyldiphenylsulfide, 3,4'-diamino-5,2'-ditrifluoromethyldiphenylsulfide, 3,4'-diamino-5,3'-ditrifluoromethyldiphenyl sulfide, 3,3'-diamino-5-trifluoromethyldiphenylsulfide, 3,3'-diamino-5,5'-ditrifluoromethyldiphenyl sulfide, 4,4'-diamino-2-methyldiphenylsulfide, 4,4'-diamino-3-methyldiphenylsulfide, 4,4'-diamino-2,2'-dimethyldiphenylsulfide, 4,4'-diamino-2,3'-dimethyldiphenylsulfide, 4,4'-diamino-3,3'-dimethyldiphenylsulfide, 3,4'-diamino-5-methyldiphenylsulfide, 3,4'-diamino-2'-methyldiphenylsulfide, 3,4'-diamino-3'-methyldiphenylsulfide, 3,4'-diamino-5,2'-dimethyldiphenylsulfide, 3,4'-diamino-5,3'-dimethyldiphenyl sulfide, 3,3'-diamino-5-methyldiphenylsulfide, 3,3'-diamino-5,5'-dimethyldiphenyl sulfide, 4,4'-diamino-2-bromodiphenylsulfide, 4,4'-diamino-3-bromodiphenylsulfide, 4,4'-diamino-2,2'-dibromodiphenylsulfide, 4,4'-diamino-2,3'-dibromodiphenylsulfide, 4,4'-diamino-3,3'-dibromodiphenylsulfide, 3,4'-diamino-5-bromodiphenylsulfide, 3,4'-diamino-2'-bromodiphenylsulfide, 3,4'-diamino-3'-bromodiphenylsulfide, 3,4'-diamino-5,2'-dibromodiphenylsulfide, 3,4'-diamino-5,3'-dibromodiphenyl sulfide, 3,3'-diamino-5-bromodiphenylsulfide, 3,3'-diamino-5,5'-dibromodiphenyl sulfide, 4,4'-diamino-2-chlorodiphenylsulfide, 4,4'-diamino-3-chlorodiphenylsulfide, 4,4'-diamino-2,2'-dichlorodiphenylsulfide, 4,4'-diamino-2,3'-dichlorodiphenylsulfide, 4,4'-diamino-3,3'-dichlorodiphenylsulfide, 3,4'-diamino-5-chlorodiphenylsulfide, 3,4'-diamino-2'-chlorodiphenylsulfide, 3,4'-diamino-3'-chlorodiphenylsulfide, 3,4'-diamino-5,2'-dichlorodiphenylsulfide, 3,4'-diamino-5,3'-dichlorodiphenyl sulfide, 3,3'-diamino-5-chlorodiphenylsulfide and 3,3'-diamino-5,5'-dichlorodiphenyl sulfide;

(1-4) those in which $A_1$ is $-SO_2-$ such as 4,4'-diaminodiphenylsulfone, 3,4'-diaminodiphenylsulfone, 3,3'-diaminodiphenylsulfone, 4,4'-diamino-2-trifluoromethyldiphenylsulfone, 4,4'-diamino-3-trifluoromethyldiphenylsulfone, 4,4'-diamino-2,2'-ditrifluoromethyldiphenylsulfone, 4,4'-diamino-2,3'-ditrifluoromethyldiphenylsulfone, 4,4'-diamino-3,3'-ditrifluoromethyldiphenylsulfone, 3,4'-diamino-5-trifluoromethyldiphenylsulfone, 3,4'-diamino-2'-trifluoromethyldiphenyl sulfone, 3,4'-diamino-3'-trifluoromethyldiphenyl sulfone, 3,4'-diamino-5,2'-ditrifluoromethyldiphenylsulfone, 3,4'-diamino-5,3'-ditrifluoromethyldiphenylsulfone, 3,3'-diamino-5-trifluoromethyldiphenylsulfone, 3,3'-diamino-5,5'-ditrifluoromethyldiphenyl sulfone, 4,4'-diamino-2-methyldiphenylsulfone, 4,4'-diamino-3-methyldiphenylsulfone, 4,4'-diamino-2,2'-dimethyldiphenylsulfone, 4,4'-diamino-2,3'-dimethyldiphenylsulfone, 4,4'-diamino-3,3'-dimethyldiphenylsulfone, 3,4'-diamino-5-methyldiphenylsulfone, 3,4'-diamino-2'-methyldiphenyl sulfone, 3,4'-diamino-3'-methyldiphenyl sulfone, 3,4'-diamino-5,2'-dimethyldiphenyl sulfone, 3,4'-diamino-5,3'-dimethyldiphenyl sulfone, 3,3'-diamino-5-methyldiphenylsulfone, 3,3'-diamino-5,5'-dimethyldiphenyl sulfone, 4,4'-diamino-2-bromodiphenylsulfone, 4,4'-diamino-3-bromodiphenylsulfone, 4,4'-diamino-2,2'-dibromodiphenylsulfone, 4,4'-diamino-2,3'-dibromodiphenylsulfone, 4,4'-diamino-3,3'-dibromodiphenylsulfone, 3,4'-diamino-5-bromodiphenylsulfone, 3,4'-diamino-2'-bromodiphenyl sulfone, 3,4'-diamino-3'-bromodiphenyl sulfone, 3,4'-diamino-5,2'-dibromodiphenyl sulfone, 3,4'-diamino-5,3'-dibromodiphenyl sulfone, 3,3'-diamino-5-bromodiphenylsulfone, 3,3'-diamino-5,5'-dibromodiphenyl sulfone, 4,4'-diamino-2-chlorodiphenylsulfone, 4,4'-diamino-3-chlorodiphenylsulfone,

4,4'-diamino-2,2'-dichlorodiphenylsulfone, 4,4'-diamino-2,3'-dichlorodiphenylsulfone, 4,4'-diamino-3,3'-dichlorodiphenylsulfone, 3,4'-diamino-5-chlorodiphenylsulfone, 3,4'-diamino-2'-chlorodiphenyl sulfone, 3,4'-diamino-3'-chlorodiphenyl sulfone, 3,4'-diamino-5,2'-dichlorodiphenyl sulfone, 3,4'-diamino-5,3'-dichlorodiphenyl sulfone, 3,3'-diamino-5-chlorodiphenylsulfone and 3,3'-diamino-5,5'-dichlorodiphenyl sulfone;

(1-5) those in which $A_1$ is -CO- such as 4,4'-diaminobenzophenone, 3,4'-diaminobenzophenone, 3,3'-diaminobenzophenone, 4,4'-diamino-2-trifluoromethylbenzophenone, 4,4'-diamino-3-trifluoromethylbenzophenone, 4,4'-diamino-2,2'-ditrifluoromethylbenzophenone, 4,4'-diamino-2,3'-ditrifluoromethylbenzophenone, 4,4'-diamino-3,3'-ditrifluoromethylbenzophenone, 3,4'-diamino-5-trifluoromethyldibenzophenone, 3,4'-diamino-2'-trifluoromethyl benzophenone, 3,4'-diamino-3'-trifluoromethyl benzophenone, 3,4'-diamino-5,2'-ditrifluoromethyl benzophenone, 3,4'-diamino-5,3'-ditrifluoromethyl benzophenone, 3,3'-diamino-5-trifluoromethylbenzophenone, 3,3'-diamino-5,5'-ditrifluoromethyl benzophenone, 4,4'-diamino-2-methylbenzophenone, 4,4'-diamino-3-methylbenzophenone, 4,4'-diamino-2,2'-dimethylbenzophenone, 4,4'-diamino-2,3'-dimethylbenzophenone, 4,4'-diamino-3,3'-dimethylbenzophenone, 3,4'-diamino-5-methyldibenzophenone, 3,4'-diamino-2'-methylbenzophenone, 3,4'-diamino-3'-methyl benzophenone, 3,4'-diamino-5,2'-dimethyl benzophenone, 3,4'-diamino-5,3'-dimethyl benzophenone, 3,3'-diamino-5-methylbenzophenone, 3,3'-diamino-5,5'-dimethyl benzophenone, 4,4'-diamino-2-bromobenzophenone, 4,4'-diamino-3-bromobenzophenone, 4,4'-diamino-2,2'-dibromobenzophenone, 4,4'-diamino-2,3'-dibromobenzophenone, 4,4'-diamino-3,3'-dibromobenzophenone, 3,4'-diamino-5-bromobenzophenone, 3,4'-diamino-2'-bromobenzophenone, 3,4'-diamino-3'-bromobenzophenone, 3,4'-diamino-5,2'-dibromobenzophenone, 3,4'-diamino-5,3'-dibromobenzophenone, 3,3'-diamino-5-bromobenzophenone, 3,3'-diamino-5,5'-dibromobenzophenone, 4,4'-diamino-2-chlorobenzophenone, 4,4'-diamino-3-chlorobenzophenone, 4,4'-diamino-2,2'-dichlorobenzophenone, 4,4'-diamino-2,3'-dichlorobenzophenone, 4,4'-diamino-3,3'-dichlorobenzophenone, 3,4'-diamino-5-chlorobenzophenone, 3,4'-diamino-2'- chlorobenzophenone, 3,4'-diamino-3'-chlorobenzophenone, 3,4'-diamino-5,2'-dichlorobenzophenone, 3,4'-diamino-5,3'-dichlorobenzophenone, 3,3'-diamino-5-chlorobenzophenone and 3,3'-diamino-5,5'-dichlorobenzophenone;

(1-6) those in which $A_1$ is $-CH_2-$ such as 4,4'-diaminodiphenylmethane, 3,4'-diaminodiphenylmethane, 3,3'-diaminodiphenylmethane and 4,2'-diaminodiphenylmethane;

(1-7) those in which $A_1$ is $-C(CH_3)_2-$ or $-C(CF_3)_2-$ such as 2,2-bis(4-aminophenyl)propane, 2,2-bis(3-aminophenyl) propane, 2-(3-aminophenyl)-2-(4-aminophenyl)propane, 2,2-bis(4-amino-2-trifluoromethylphenyl)propane, 2,2-bis(4-amino-3-trifluoromethylphenyl)propane, 2-(4-aminophenyl)-2-(4'-amino-2'-trifluoromethylphenyl)propane, 2-(4-aminophenyl)-2-(4'-amino-3'-trifluoromethylphenyl)propane, 2,2-bis(3-amino-5-trifluoromethylphenyl) propane, 2-(3-amino-5-trifluoromethylphenyl)-2-(3'-aminophenyl)propane, 2-(3-amino-5-trifluoromethylphenyl)-2-(4'-amino-2'-trifluoromethylphenyl)propane, 2-(3-amino-5-trifluoromethylphenyl)-2-(4'-amino-3'-trifluoromethylphenyl)propane, 2-(3-aminophenyl)-2-(4'-amino-2'-trifluoromethylphenyl)propane, 2-(3-aminophenyl)-2-(4'-amino-3'-trifluoromethylphenyl)propane, 2-(3-amino-5-trifluoromethylphenyl)-2-(4'-amino-phenyl)propane, 2,2-bis (4-aminophenyl)-1,1,1,3,3,3-hexafluoropropane, 2,2-bis(3-aminophenyl)-1,1,1,3,3,3-hexafluoropropane, 2-(3-aminophenyl)-2-(4-aminophenyl)-1,1,1,3,3,3-hexafluoropropane, 2,2-bis(4-amino-2-trifluoromethylphenyl)-1,1,1,3,3,3-hexafluoropropane,2,2-bis(4-amino-3-trifluoromethylphenyl)-1,1,1,3,3,3-hexafluoropropane,2-(4-aminophenyl)-2-(4'-amino-2'-trifluoromethylphenyl)-1,1,1,3,3,3-hexafluoropropane, 2-(4-aminophenyl)-2-(4'-amino-3'-trifluoromethylphenyl)-1,1,1,3,3,3-hexafluoropropane, 2,2-bis(3-amino-5-trifluoromethylphenyl)-1,1,1,3,3,3-hexafluoropropane, 2-(3-amino-5-trifluoromethylphenyl)-2-(3'-aminophenyl)-1,1,1,3,3,3-hexafluoropropane, 2-(3-amino-5-trifluoromethylphenyl)-2-(4'-amino-2'-trifluoromethylphenyl)-1,1,1,3,3,3-hexafluoropropane, 2-(3-amino-5-trifluoromethylphenyl)-2-(4'-amino-3'-trifluoromethylphenyl)-1,1,1,3,3,3-hexafluoropropane, 2-(3-aminophenyl)-2-(4'-amino-2'-trifluoromethylphenyl)-1,1,1,3,3,3-hexafluoropropane, 2-(3-aminophenyl)-2-(4'-amino-3'-trifluoromethylphenyl)-1,1,1,3,3,3-hexafluoropropane and 2-(3-amino-5-trifluoromethylphenyl)-2-(4'-amino-phenyl)-1,1,1,3,3,3-hexafluoropropane.

Examples of the diamine represented by general formula (14) include 1,3-bis(3-aminophenoxy)benzene, 1,3-bis(4-aminophenoxy)benzene, 1,4-bis(3-aminophenoxy)benzene, 1,4-bis(4-aminophenoxy)benzene, 2,6-bis (3-aminophenoxy)benzonitrile, 2,6-bis(4-aminophenoxy)benzonitrile, 1,3-bis(3-aminophenoxy)-2-chlorobenzene, 1,3-bis(3-aminophenoxy)-5-chlorobenzene, 1,3-bis(4-aminophenoxy)-4-chlorobenzene, 1,3-bis(3-aminophenoxy)-2-bromobenzene, 1,3-bis(3-aminophenoxy)-5-bromobenzene, 1,3-bis(4-aminophenoxy)-4-bromobenzene, 1,3-bis (3-aminophenoxy)-4-trifluoromethylbenzene, 1,3-bis(4-aminophenoxy)-4-trifluoromethylbenzene, 1,3-bis(3-aminophenoxy)-5-trifluoromethylbenzene, 1,3-bis(4-aminophenoxy)-5-trifluoromethylphenoxy)benzene, 1,3-bis(3-amino-5-trifluoromethylphenoxy)benzene, 1,3-bis(4-amino-2-trifluoromethylphenoxy)benzene, 1,4-bis(3-amino-5-trifluoromethylphenoxy)benzene, 1,4-bis(4-amino-2-trifluoromethylphenoxy)benzene, 1,3-bis(3-amino-5-trifluoromethylphenoxy)-4-trifluoromethylbenzene, 1,3-bis(4-amino-2-trifluoromethylphenoxy)-4-trifluoromethylbenzene, 1,3-bis(3-amino-5-trifluoromethylphenoxy)-5-trifluoromethylbenzene and 1,3-bis(4-amino-2-trifluoromethylphenoxy)-5-trifluoromethylbenzene.

Examples of the diamine represented by general formula (15) include 4,4'-bis(3-aminophenoxy)biphenyl, 4,4'-bis(4-aminophenoxy)biphenyl, bis[4-(3-aminophenoxy)phenyl]sulfide, bis[4-(4-aminophenoxy)phenyl]sulfide, bis [4-(3-aminophenoxy)phenyl]sulfone, bis[4-(4-aminophenoxy)phenyl]sulfone, bis[4-(3-aminophenoxy)phenyl] ether, bis [4-(4-aminophenoxy)phenyl] ether, bis[4-(3-aminophenoxy)phenyl] ketone, bis[4-(4-aminophenoxy)phenyl] ketone, 2,2-bis[4-(3-aminophenoxy)phenyl]propane, 2,2-bis[4-(4-aminophenoxy)phenyl]propane, 2,2-bis[3-(3-aminophenoxy) phenyl]-1,1,1,3,3,3-hexafluoropropane, 2,2-bis[4-(4-aminophenoxy)phenyl]-1,1,1,3,3,3-hexafluoropropane, 4,4'-bis (3-amino-5-trifluoromethylphenoxy)biphenyl, 4,4'-bis(4-amino-2-trifluoromethylphenoxy)biphenylbis[4-(3-amino-5-trifluoromethylphenoxy)phenyl]sulfide, bis[4-(4-amino-2-trifluoromethylphenoxy)phenyl]sulfide, bis[4-(3-amino-5-trifluoromethylphenoxy)phenyl]sulfone, bis[4-(4-amino-2-trifluoromethylphenoxy)phenyl]sulfone, bis[4-(3-amino-5-trifluoromethylphenoxy)phenyl] ether, bis[4-(4-amino-2-trifluoromethylphenoxy)phenyl] ether, bis[4-(3-amino-5-trifluoromethylphenoxy)phenyl] ketone, bis[4-(4-amino-2-trifluoromethylphenoxy)phenyl] ketone, 2,2-bis[4-(3-amino-5-trifluoromethylphenoxy)phenyl]propane, 2,2-bis[4-(4-amino-2-trifluoromethylphenoxy)phenyl]propane, 2,2-bis[3-(3-amino-5-trifluoromethylphenoxy)phenyl]-1,1,1,3,3,3-hexafluoropropane and 2,2-bis[4-(4-amino-2-trifluoromethylphenoxy) phenyl]-1,1,1,3,3,3-hexafluoropropane.
Particularly preferable diamines represented by general formula (13) include 4,4'-diamino-2,2'-ditrifluoromethylbiphenyl, 4,4'-diaminodiphenyl ether, 3,4'-diaminodiphenyl ether, 3,3'-diaminodiphenyl ether, 3,3'-diamino-5,5'-ditrifluoromethyldiphenyl ether, 4,4'-diaminodiphenylsulfone, 3,4'-diaminodiphenylsulfone, 3,3'-diaminodiphenylsulfone, 4,4'-diaminodiphenylsulfide, 3,4'-diaminodiphenylsulfide, 3,3'-diaminodiphenylsulfide, 2,2-bis(4-aminophenoxy)-1,1,1,3,3,3-hexafluoropropane, 2,2-bis(3-aminophenoxy)-1,1,1,3,3,3-hexafluoropropane, 2-(3-aminophenoxy)-2-(4-aminophenoxy)-1,1,1,3,3,3-hexafluoropropane.
Particularly preferable diamines represented by general formula (14) include 1,3-bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-aminophenoxy)-5-chlorobenzene, 1,3-bis(3-aminophenoxy)-4-trifluoromethylbenzene, 1,3-bis(4-aminophenoxy)-4-trifluoromethylbenzene, 1,3-bis(3-aminophenoxy)-5-trifluoromethylbenzene, 1,3-bis(4-aminophenoxy)-5-trifluoromethylphenoxy)benzene, 1,3-bis(3-amino-5-trifluoromethylphenoxy)benzene, 1,3-bis(4-amino-2-trifluoromethylphenoxy)benzene, 1,4-bis(3-amino-5-trifluoromethylphenoxy)benzene, 1,4-bis(4-amino-2-trifluoromethylphenoxy) benzene, 1,3-bis(3-amino-5-trifluoromethylphenoxy)-4-trifluoromethylbenzene, 1,3-bis(4-amino-2-trifluoromethylphenoxy)-4-trifluoromethylbenzene, 1,3-bis(3-amino-5-trifluoromethylphenoxy)-5-trifluoromethylbenzene and 1,3-bis (4-amino-2-trifluoromethylphenoxy)-5-trifluoromethylbenzene.
Particularly preferable diamines represented by general formula (15) include 4,4'-bis(3-aminophenoxy)biphenyl, 4,4'-bis(4-aminophenoxy)biphenyl, bis[4-(3-aminophenoxy)phenyl]sulfide, bis[4-(4-aminophenoxy)phenyl]sulfide, bis[4-(3-aminophenoxy)phenyl]sulfone, bis[4-(4-aminophenoxy)phenyl]sulfone, bis[4-(3-aminophenoxy)phenyl] ether, bis[4-(4-aminophenoxy)phenyl] ether, bis[4-(3-aminophenoxy)phenyl] ketone, bis[4-(4-aminophenoxy)phenyl] ketone, 2,2-bis[4-(3-aminophenoxy)phenyl]propane, 2,2-bis[4-(4-aminophenoxy)phenyl]propane, 2,2-bis[3-(3-aminophenoxy) phenyl]-1,1,1,3,3,3-hexafluoropropane, 2,2-bis[4-(4-aminophenoxy)phenyl]-1,1,1,3,3,3-hexafluoropropane, 4,4'-bis (3-amino-5-trifluoromethylphenoxy)biphenyl and 4,4'-bis(4-amino-2-trifluoromethylphenoxy)biphenyl.

Diamine which may be combined

For preparing a polyimide according to this invention, at least one of the above diamines may be combined for improving its performance, modifying its quality or reducing a cost, or a diamine described below other than the above diamines may be used in combination with a diamine represented by general formula (13), (14) or (15).
The total content of diamines represented by general formulas (13), (14) and (15) is preferably at least 50 mol%, more preferably 70 mol%.
Examples of diamines which may be combined include:

a) those comprising one benzene ring such as p-phenylenediamine and m-phenylenediamine;
b) those comprising two benzene rings such as 1,1-di(3-aminophenyl)-1-phenylethane, 1,1-di(4-aminophenyl)-1-phenylethane and 1-(3-aminophenyl)-1-(4-aminophenyl)-1-phenylethane;
c) those comprising three benzene rings such as 1,3-bis(3-aminobenzoyl)benzene, 1,3-bis(4-aminobenzoyl)benzene, 1,4-bis(3-aminobenzoyl)benzene, 1,4-bis(4-aminobenzoyl)benzene, 1,3-bis(3-amino-α,α-dimethylbenzyl) benzene, 1,3-bis(4-amino-α,α-dimethylbenzyl)benzene, 1,4-bis(3-amino-α,α-dimethylbenzyl)benzene, 1,4-bis (4-amino-α,α-dimethylbenzyl)benzene, 1,3-bis(3-amino-α,α-ditrifluoromethylbenzyl)benzene, 1,3-bis(4-amino-α,α-ditrifluoromethylbenzyl)benzene, 1,4-bis(3-amino-α,α-ditrifluoromethylbenzyl)benzene, 1,4-bis(4-amino-α,α-ditrifluoromethylbenzyl)benzene, 2,6-bis(3-aminophenoxy)pyridine, 2,6-bis(3-aminophenoxy)benzonitrile and 2,6-bis(4-aminophenoxy)benzonitrile;
d) those comprising four benzene rings such as 4,4'-bis(3-aminophenoxy)biphenyl, 4,4'-bis(4-aminophenoxy)biphenyl, bis[4-(3-aminophenoxy)phenyl] ketone, bis[4-(4-aminophenoxy)phenyl] ketone, bis[4-(3-aminophenoxy)phenyl]sulfide, bis[4-(4-aminophenoxy)phenyl]sulfide, bis[4-(3-aminophenoxy)phenyl]sulfone, bis[4-(4-aminophenoxy)phenyl]sulfone, bis[4-(3-aminophenoxy)phenyl] ether, bis[4-(4-aminophenoxy)phenyl] ether, 2,2-bis[4-(3-aminophenoxy)phenyl]propane, 2,2-bis[4-(4-aminophenoxy)phenyl]propane, 2,2-bis[3-(3-aminophenoxy)phenyl]-1,1,1,3,3,3-hexafluoropropane and 2,2-bis[4-(4-aminophenoxy)phenyl]-1,1,1,3,3,3-hexafluoropropane;

d) those comprising five benzene rings such as 1,3-bis[4-(3-aminophenoxy)benzoyl]benzene, 1,3-bis[4-(4-aminophenoxy)benzoyl]benzene, 1,4-bis[4-(3-aminophenoxy)benzoyl]benzene, 1,4-bis[4-(4-aminophenoxy)benzoyl] benzene, 1,3-bis[4-(3-aminophenoxy)-α,α-dimethylbenzyl]benzene, 1,3-bis[4-(4-aminophenoxy)-α,α-dimethylbenzyl]benzene, 1,4-bis[4-(3-aminophenoxy)-α,α-dimethylbenzyl]benzene and 1,4-bis[4-(4-aminophenoxy)-α,α-dimethylbenzyl]benzene;

e) those comprising six benzene rings such as 4,4'-bis[4-(4-aminophenoxy)benzoyl]diphenyl ether, 4,4'-bis [4-(4-amino-α,α-dimethylbenzyl)phenoxy]benzophenone, 4,4'-bis[4-(4-amino-α,α-dimethylbenzyl)phenoxy] diphenylsulfone and 4,4'-bis[4-(4-aminophenoxy)phenoxy]diphenylsulfone;

f) those comprising an aromatic substitute such as 3,3'-diamino-4,4'-diphenoxybenzophenone, 3,3'-diamino-4,4'-diphenoxybenzophenone, 3,3'-diamino-4-phenoxybenzophenone and 3,3'-diamino-4-phenoxybenzophenone; and

g) those comprising a spirobiindane ring such as 6,6'-bis(3-aminophenoxy)-3,3,3,'3,'-tetramethyl-1,1'-spirobiindane and 6,6'-bis(4-aminophenoxy)-3,3,3,'3,'-tetramethyl-1,1'-spirobiindane, as well as aliphatic diamines including

h)siloxanediamines such as 1,3-bis(3-aminopropyl)tetramethyldisiloxane, 1,3-bis(4-aminobutyl)tetramethyldisiloxane, α,ω-bis(3-aminopropyl)polydimethylsiloxane and α,ω-bis(3-aminobutyl)polydimethylsiloxane;

i) ethyleneglycol diamines such as bis(aminomethyl) ether, bis(2-aminoethyl) ether, bis(3-aminopropyl) ether, bis (2-aminomethoxy)ethyl] ether, bis[2-(2-aminoethoxy)ethyl] ether, bis[2-(3-aminopropoxy)ethyl] ether, 1,2-bis(aminomethoxy)ethane, 1,2-bis(2-aminoethoxy)ethane, 1,2-bis[2-(aminomethoxy)ethoxy]ethane, 1,2-bis[2-(2-aminoethoxy)ethoxy]ethane, ethyleneglycol bis(3-aminopropyl) ether, diethyleneglycol bis(3-aminopropyl) ether and triethyleneglycol bis(3-aminopropyl) ether;

j) methylenediamines such as ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane and 1,12-diaminododecane; and

k) aliphatic diamines such as 1,2-diaminocyclohexane, 1,3-diaminocyclohexane, 1,4-diaminocyclohexane, 1,2-di (2-aminoethyl)cyclohexane, 1,3-di(2-aminoethyl)cyclohexane, 1,4-di(2-aminoethyl)cyclohexane, bis(4-aminocyclohexyl)methane, 2,6-bis(aminomethyl)bicyclo[2.2.1]heptane and 2,5-bis(aminomethyl)bicyclo[2.2.1]heptane.

Examples of a tetracarboxylic dianhydride represented by formula (16) which is used for preparing a polyimide of this invention include the following four compounds: 3,3',4,4'-biphenyltetracarboxylic dianhydride, bis(3,4-dicarboxyphenyl) ether dianhydride, bis(3,4-dicarboxyphenyl)sulfone dianhydride and 2,2-bis(3,4-dicarboxyphenyl)-1,1,1,3,3,3-hexafluoropropane dianhydride.

A polyimide according to this invention has the structure of general formula (1). Belonging to this category, the structure having a particular substitution pattern represented by general formula (9) is particularly preferable because it has a higher light transmittance and a higher refractive index.

One or more of the tetracarboxylic dianhydrides described below can be copolymerized without limitation, for improve performance or quality of a polyimide of this invention. In such a case, the amount of the tetracarboxylic dianhydride represented by formula (16) is preferably 50 mol% or more, more preferably 70 mol% or more to the total amount of tetracarboxylic dianhydrides.

Examples of tetracarboxylic dianhydrides which can be combined include pyromellitic dianhydride, 3,3',4,4'-benzophenonetetracarboxylic dianhydride, bis(3,4-dicarboxyphenyl)sulfide dianhydride, bis(3,4-dicarboxyphenyl) methane dianhydride, 2,2-bis(3,4-dicarboxyphenyl)propane dianhydride, 1,3-bis(3,4-dicarboxyphenoxy)benzene dianhydride, 1,4-bis(3,4-dicarboxyphenoxy)benzene dianhydride, 4,4'-bis(3,4-dicarboxyphenoxy)biphenyl dianhydride, 2,2-bis[(3,4-dicarboxyphenoxy)phenyl]propane dianhydride, 2,3,6,7-naphthalenetetracarboxylic dianhydride, 1,4,5,8-naphthalenetetracarboxylic dianhydride, ethylenetetracarboxylic dianhydride, butanetetracarboxylic dianhydride, cyclopentanetetracarboxylic dianhydride, 2,2',3,3'-benzophenonetetracarboxylic dianhydride, 2,2',3,3'-biphenyltetracarboxylic dianhydride, 2,2-bis(2,3-dicarboxyphenyl)propane dianhydride, 2,2-bis(2,3-dicarboxyphenyl)-1,1,1,3,3,3-hexafluoropropane dianhydride, bis(2,3-dicarboxyphenyl) ether dianhydride, bis(2,3-dicarboxyphenyl) sulfide dianhydride, bis(2,3-dicarboxyphenyl)sulfone dianhydride, 1,3-bis(2,3-dicarboxyphenoxy)benzene dianhydride, 1,4-bis(2,3-dicarboxyphenoxy)benzene dianhydride and 1,2,5,6-naphthalenetetracarboxylic dianhydride.

When less than 1 mole of a tetracarboxylic dianhydride is used to 1 mole of a diamine for producing a polyimide for an optical component of this invention, the molecular end of the polyimide produced remains as an amino group. Thus, examples of an aromatic dicarboxylic anhydride represented by general formula (5) which is used for capping the end amino group include phthalic anhydride, 4-phenylphthalic anhydride, 4-phenoxyphthalic anhydride, 4-phenylsulfinylphthalic anhydride, 4-phenylsulfonylphthalic anhydride, 4-phenylcarbonylphthalic anhydride, 4-(2-phenylisopropyl)phthalic anhydride, 4-(1,1,1,3,3,3-hexafluoro-2-phenylisopropyl)phthalic anhydride, 2,3-naphthalenedicarboxylic anhydride and 1,8-naphthalenedicarboxylic anhydride.

Among these aromatic dicarboxylic anhydrides, phthalic anhydride is most preferable in the light of quality and handling properties of the polyimide of this invention.

In particular, the end amino group in a polyimide for an optical component may be at least partially end capped with the structure represented by general formula (7) to which a crosslinking structure can be introduced, to improve chemical resistance of the polyimide and thus to provide a particularly useful optical component.

Crosslinker end

When less than 1 mole of a tetracarboxylic dianhydride is used to 1 mole of a diamine for producing a polyimide for an optical lens of this invention, the molecular end of the polyimide produced remains as an amino group. Thus, examples of a crosslinker-containing dicarboxylic anhydride represented by general formula (7) which is used for capping the end amino group and for improving chemical resistance, i.e., the main objective of this invention, include maleic anhydride, 2-methylmaleic anhydride, 2,3-dimethylmaleic anhydride, 2-fluoromaleic anhydride, 2,3-difluoromaleic anhydride, 2-trifluoromethylmaleic anhydride, 2,3-ditrifluoromethylmaleic anhydride, 2-ethylmaleic anhydride, 2,3-diethylmaleic anhydride, 2-phenylmaleic anhydride, 2,3-diphenylmaleic anhydride, 5-norbornene-2,3-dicarboxylic anhydride, methyl-5-norbornene-2,3-dicarboxylic anhydride, dimethyl-5-norbornene-2,3-dicarboxylic anhydride, fluoro-5-norbornene-2,3-dicarboxylic anhydride, difluoro-5-norbornene-2,3-dicarboxylic anhydride, trifluoromethyl-5-norbornene-2,3-dicarboxylic anhydride, ditrifluoromethyl-5-norbornene-2,3-dicarboxylic anhydride, ethyl-5-norbornene-2,3-dicarboxylic anhydride, diethyl-5-norbornene-2,3-dicarboxylic anhydride, phenyl-5-norbornene-2,3-dicarboxylic anhydride, diphenyl-5-norbornene-2,3-dicarboxylic anhydride, cis-1,2,3,4-tetrahydrophthalic anhydride, 5-methyl-cis-1,2,3,4-tetrahydrophthalic anhydride, 5,6-dimethyl-cis-1,2,3,4-tetrahydrophthalic anhydride, 5-fluoro-cis-1,2,3,4-tetrahydrophthalic anhydride, 5,6-difluoro-cis-1,2,3,4-tetrahydrophthalic anhydride, 5-trifluoromethyl-cis-1,2,3,4-tetrahydrophthalic anhydride, 5,6-ditrifluoromethyl-cis-1,2,3,4-tetrahydrophthalic anhydride, 5-ethyl-cis-1,2,3,4-tetrahydrophthalic anhydride, 5,6-diethyl-cis-1,2,3,4-tetrahydrophthalic anhydride, 1-phenyl-2-(3,4-dicarboxyphenyl)acetylene anhydride, 5-phenyl-cis-1,2,3,4-tetrahydrophthalic anhydride, 5,6-diphenyl-cis-1,2,3,4-tetrahydrophthalic anhydride and 6-ethynylphthalic anhydride. These crosslinker-containing dicarboxylic anhydrides may be used alone or in combination of two or more.

Other crosslinker-containing dicarboxylic anhydrides which may be used include those in which a part or all of hydrogen atoms on an aromatic ring are substituted with a substituent selected from the group consisting of fluoro, methyl, methoxy, trifluoromethyl and trifluoromethoxy; and those in which a crosslinking moiety such as ethynyl, benzocyclobuten-4'-yl, vinyl, allyl, cyano, isocyanate, nitrilo and isopropenyl is introduced as a substituent to a part or all of hydrogen atoms on an aromatic ring. Alternatively, vinylene, vinylidene or ethylidene as a crosslinking moiety may be incorporated, not as a substituent, into a principal chain.

The amount of an aromatic dicarboxylic anhydride is 10 to 100 mol% to the amount of the remaining amino group. Specifically, a molar number of the remaining end amino group can be represented by equation (a) where A is a molar number of the diamine and B is a molar number of the tetracarboxylic dianhydride. Thus, a molar number of the aromatic dicarboxylic anhydride, C, is within the range represented by equation (b).

$$(A\text{-}B) \times 2 \qquad \text{(a)}$$

$$10 \leq \{C \div [(A\text{-}B) \times 2]\} \times 100 \leq 100 \qquad \text{(b)}$$

If the amount of the aromatic dicarboxylic anhydride is less than 10 mol% of the remaining amino group, capping may be inadequate, while if more than 100 mol%, a molecular weight required for obtaining satisfactory properties cannot be provided. The amount is preferably 20 to 100 mol%, more preferably 40 to 100 mol%.

When less than 1 mole of a diamine is used to 1 mole of a tetracarboxylic dianhydride for producing a polyimide for an optical component of this invention, the molecular end of the polyimide produced remains as a dicarboxylic anhydride group. Thus, examples of an aromatic monoamine represented by general formula (6) which is used for capping the end dicarboxylic anhydride group include aniline, 2-fluoroaniline, 3-fluoroaniline, 4-fluoroaniline, 2-chloroaniline, 3-chloroaniline, 4-chloroaniline, 2-bromoaniline, 3-bromoaniline, 4-bromoaniline, 2-nitroaniline, 3-nitroaniline, 4-nitroaniline, 2-cyanoaniline, 3-cyanoaniline, 4-cyanoaniline, 2-methylaniline, 3-methylaniline, 4-methylaniline, 2-trifluoromethylaniline, 3-trifluoromethylaniline, 4-trifluoromethylaniline, 2-methoxyaniline, 3-methoxyaniline, 4-methoxyaniline, 2-aminobiphenyl, 3-aminobiphenyl, 4-aminobiphenyl, 2-aminodiphenyl ether, 3-aminodiphenyl ether, 4-aminodiphenyl ether, 2-aminodiphenylsulfide, 3-aminodiphenylsulfide, 4-aminodiphenylsulfide, 2-aminodiphenylsulfone, 3-aminodiphenylsulfone, 4-aminodiphenylsulfone, 2-aminobenzophenone, 3-aminobenzophenone, 4-aminobenzophenone, 1-aminonaphthalene and 2-aminonaphthalene.

Among these monoamines, aniline is most preferable in the light of quality and handling properties of a polyimide produced of this invention.

In particular, the end dicarboxylic anhydride group in a polyimide for an optical component may be at least partially end capped with the structure represented by general formula (8) to which a crosslinking structure can be introduced, to improve chemical resistance of the polyimide and thus to provide a particularly useful optical component.

Examples of an amine to which the crosslinking structure represented by general formula (8) include 4-vinylaniline, 3-vinylaniline, 4-ethynylaniline and 3-ethynylaniline.

The amount of an aromatic monoamine is 10 to 100 mol% to the amount of the remaining end dicarboxylic anhydride group. Specifically, a molar number of the remaining end amino group can be represented by equation (c) where A is a molar number of the diamine and B is a molar number of the tetracarboxylic dianhydride. Thus, a molar number of the aromatic monoamine, D, is within the range represented by equation (d).

$$(B\text{-}A) \times 2 \qquad \text{(c)}$$

$$10 \leq \{D \div [(B\text{-}A) \times 2]\} \times 100 \leq 100 \qquad \text{(d)}$$

If the amount of the aromatic monoamine is less than 10 mol% of the remaining dicarboxylic anhydride group, end capping may be inadequate, while if more than 100 mol%, a molecular weight required for obtaining satisfactory properties cannot be provided. The amount is preferably 20 to 100 mol%, more preferably 40 to 100 mol%.

A particular polyimide according to this invention may be used in, for example, an optical lens, intraocular lens, microlens or optical filter.

In this invention, end capping is further preferable because coloring of a polyimide obtained may be prevented by capping the end amino or carboxylic anhydride group with a dicarboxylic anhydride or aromatic monoamine.

One or two of tetracarboxylic dianhydrides represented by general formula (16) may be combined and a tetracarboxylic dianhydride other than those represented by formula (16) may be partly used. The total amount of the tetracarboxylic dianhydrides is 0.9 to 1.1 molar ratio to one mole of the diamine used. The molar ratio may be varied to control a molecular weight of a polyamic acid or polyimide obtained. If the molar ratio is less than 0.9 or more than 1.1, a molecular weight required for obtaining satisfactory properties cannot be provided. It is preferably 0.92 to 1.08, more preferably 0.94 to 1.06, most preferably 0.95 to 1.05.

A diamine represented by general formula (13), (14) or (15) and another diamine partly added, a tetracarboxylic dianhydride represented by general formula (16) and another tetracarboxylic dianhydride partly added, a dicarboxylic anhydride represented by general formulas (5) and/or (7), or an aromatic monoamine represented by general formulas (6) or (8) may be added to and reacted in a polymerization system by, but not limited to, any of the following procedures.

i) reacting the diamine with the tetracarboxylic dianhydride and then adding the dicarboxylic anhydride or aromatic monoamine for further reaction.
ii) adding the dicarboxylic anhydride to the diamine to initiate a reaction; adding the tetracarboxylic dianhydride; and then continuing the reaction;
iii) adding the aromatic monoamine to the tetracarboxylic dianhydride to initiate a reaction; adding the diamine; and then continuing the reaction;
iv) dividing the total amount of the dicarboxylic anhydride into two aliquots; adding one of these aliquots to the diamine to initiate a reaction; then adding the tetracarboxylic dianhydride; further continuing the reaction; adding the remaining aliquot; and then continuing the reaction;
v) dividing the total amount of the aromatic amine into two aliquots; adding one of these aliquots to the tetracarboxylic dianhydride to initiate a reaction; then adding the diamine; further continuing the reaction; adding the remaining aliquot; and then continuing the reaction;
vi) combination of at least two of i) to v).

A reaction for preparing a polyimide of this invention is generally conducted in a solvent. Examples of a solvent which may be used include:

m) phenols such as phenol, o-chlorophenol, m-chlorophenol, p-chlorophenol, o-cresol, m-cresol, p-cresol, 2,3-xylenol, 2,4-xylenol, 2,5-xylenol, 2,6-xylenol, 3,4-xylenol and 3,5-xylenol;

n) aprotic amides such as N,N-dimethylformamide, N,N-dimethylacetamide, N,N-diethylacetamide, N-methyl-2-pyrrolidone, 1,3-dimethyl-2-imidazolidinone, N-methylcaprolactam and hexamethylphosphorotriamide;

o) ethers such as 1,2-dimethoxyethane, bis(2-methoxyethyl) ether, 1,2-bis(2-methoxyethoxy)ethane, tetrahydrofuran, bis[2-(2-methoxyethoxy)ethyl] ether and 1,4-dioxane;

p) amines such as pyridine, quinoline, isoquinoline, α-picoline, β-picoline, γ-picoline, isophorone, piperidine, 2,4-lutidine, 2,6-lutidine, trimethylamine, triethylamine, tripropylamine and tributylamine;

q) other solvents such as dimethylsulfoxide, dimethylsulfone, diphenyl ether, sulfolane, diphenylsulfone, tetramethylurea and anisole. These solvents may be used alone or in a combination of two or more. In this reaction, solvents may not be necessarily combined in an appropriate proportion such that they are mutually miscible. That is, they may be combined in a heterogeneous system.

The solvent system may contain, without limitation, an additional organic solvent which may be selected from benzene, toluene, o-xylene, m-xylene, p-xylene, chlorobenzene, o-dichlorobenzene, m-dichlorobenzene, p-dichlorobenzene, bromobenzene, o-dibromobenzene, m-dibromobenzene, p-dibromobenzene, o-chlorotoluene, m-chlorotoluene, p-chlorotoluene, o-bromotoluene, m-bromotoluene and p-bromotoluene.

There are no limitations to a concentration in a reaction which conducted in these solvents (hereinafter, referred to as a "polymerization concentration"). As used herein a polymerization concentration in the solvents is defined as a percent value of the total weight of the diamines and the tetracarboxylic dianhydrides to the overall weight which is the sum of the total weight of the solvents and the total weight of the diamines and the tetracarboxylic dianhydrides. A preferable polymerization concentration is 5 to 40 %, more preferably 10 to 30 %, most preferably 15 to 25 %.

Although a reaction for preparing a polyimide for an optical component according to this invention is preferably conducted in a solvent, it may be also conducted by any of the following procedures:

i) reacting the diamine and/or the tetracarboxylic dianhydride in a melt state at a temperature higher than any of their melting points;

ii) reacting the diamine and/or the tetracarboxylic dianhydride in a vapor phase by, for example, heating under a reduced pressure; and

iii) reacting the diamine and/or the tetracarboxylic dianhydride, which are activated by external energy such as light, ultrasound and plasma.

In the above solvent, the diamine represented by general formula (13), (14) or (15), the tetracarboxylic dianhydride represented by general formula (16) and as necessary the dicarboxylic anhydride represented by general formulas (5) and/or (7) or the aromatic monoamine represented by general formula (6) and/or (8) may be reacted to provide a polyimide or polyamic acid of this invention.

For preparing a polyimide, a polyamic acid as a precursor of the polyamide is first prepared. The polyamic acid may be prepared by reacting the diamine represented by general formula (13), (14) or (15), the tetracarboxylic dianhydride represented by general formula (16) and the dicarboxylic anhydride represented by general formula (5) or (7) or the aromatic monoamine represented by general formula (6) in the above solvent. In this reaction, particularly preferable solvents include aprotic amides in n) and ethers in o). In terms of a reaction temperature, a reaction time and a reaction pressure, known conditions may be used without limitation.

Specifically, a reaction temperature is preferably about -10 °C to 100 °C, more preferably an ice-cooling temperature to about 50 °C, most preferably room temperature in the light of practical operation. A reaction time depends on types of monomers used, types of solvents and a reaction temperature, and is preferably 1 to 48 hours, more preferably 2 or 3 hours to about several ten hours, most preferably 4 to 10 hours in the light of practical operation. A reaction pressure may be conveniently an atmospheric pressure. A logarithmic viscosity of the polyamic acid obtained is 0.1 to 2.0 dl/g (determined in N,N-dimethylacetamide at a concentration of 0.5 g/dl at 35 °C). If the logarithmic viscosity is less than 0.1, a molecular weight may become so low that mechanical properties may be considerably deteriorated. If it is more than 2.0, a melt viscosity may be increased.

A polyimide of this invention may be prepared by any of well-known dehydro-imidation processes of the polyamic acid obtained as described above. The processes may be generally categorized into chemical and thermal imidation processes. Any dehydro-imidation process may be used, including a combination of these categories.

In a chemical imidation process, the polyamide prepared as described above is dehydrated by reacting with a dehydrating agent capable of hydrolyzing the polyamide. Examples of a dehydrating agent which may be used include aliphatic carboxylic anhydrides such as acetic anhydride and trifluoroacetic anhydride; phosphoric acid derivatives such as polyphosphoric acid and phosphorous pentoxide; their mixed acid anhydrides; and acid chlorides such as chloromethanesulfonic acid, phosphorous pentachloride and thionyl chloride. These dehydrating agents may be used alone or in combination of two or more. The amount of the dehydrating agent is 2 to 10, preferably 2.1 to 4 molar ratio

to one mole of the diamine(s) used.

In chemical imidation, a basic catalyst may be present. Examples of a basic catalyst which may be used include the amide solvents in p). Other catalysts which may be used include organic bases such as imidazole, N,N-dimethylaniline and N,N-diethylaniline; and inorganic bases such as potassium hydroxide, sodium hydroxide, potassium carbonate, sodium carbonate, potassium hydrogen carbonate and sodium hydrogen carbonate. The amount of the catalyst is 0.001 to 0.50, preferably 0.05 to 0.2 molar ratio to one mole of the diamine(s) used.

In terms of a reaction temperature, a reaction time and a reaction pressure in chemical imidation, known conditions may be used without limitation. Specifically, a reaction temperature is preferably -10 °C to 120 °C, more preferably about room temperature to 70 °C, most preferably room temperature in the light of practical operation. A reaction time depends on the type of a solvent used and other reaction conditions, and is preferably 1 to 24 hours, more preferably about 2 to 10 hours. A reaction pressure may be conveniently an atmospheric pressure. An atmosphere may be, but not limited to, the air, nitrogen, helium, neon or argon, preferably nitrogen or argon which is an inert gas.

Thermal imidation may be conducted by

i) heating the polyamic acid as described above to thermally dehydrate it; or

ii) directly heating a solution or suspension of monomers used and a dicarboxylic anhydride in a solvent to thermally dehydrate the mixture for simultaneously conducting polymerization for forming a polyamic acid and dehydro-imidation without isolating the polyamic acid. In i), the polyamic acid may be obtained as a solution or suspension in a solvent, or as a solid isolated from the solution or suspension. The solution or suspension may be heated by evaporating the solvent while dehydro-imidation proceeds or refluxing the solvent. The former process is most suitably applied in film forming while the latter is suitable to dehydro-imidation in a reactor. Particularly preferable solvents used in the process of

ii) include phenol solvents described in m).

As with chemical imidation, thermal imidation may be conducted in the presence of a base catalyst. The type and the amount of a base catalyst used are as described for chemical imidation.

Another solvent may be present for removing water generated in the dehydro-imidation reaction from the system. Examples of solvents which may be used include benzene, toluene, o-xylene, m-xylene, p-xylene, chlorobenzene, o-dichlorobenzene, m-dichlorobenzene, p-dichlorobenzene, bromobenzene, o-dibromobenzene, m-dibromobenzene, p-dibromobenzene, o-chlorotoluene, m-chlorotoluene, p-chlorotoluene, o-bromotoluene, m-bromotoluene and p-bromotoluene. These solvents may be used alone or in combination of two or more. One or more of the solvents in m) to q) may be further added. When adding the additional solvent(s), they may not be necessarily combined in an appropriate proportion such that they are mutually miscible, i.e., they may be combined as a heterogeneous system. There are no limitations to the amount of the dehydrating agent.

In terms of a reaction temperature, a reaction time and a reaction pressure in thermal imidation, known conditions may be used without limitation. Specifically, a reaction temperature is preferably 80 °C to 400 °C, more preferably about 100 °C to 300 °C, most preferably about 150 °C to 250 °C in the light of practical operation. A reaction time depends on the type of a solvent used and other reaction conditions, and is preferably 0.5 to 24 hours, more preferably about 2 to 10 hours. A reaction pressure may be conveniently an ambient pressure. An atmosphere may be, but not limited to, the air, nitrogen, helium, neon or argon, preferably nitrogen or argon which is an inert gas.

Chemical and thermal imidation may be combined by

i) conducting the above chemical imidation while heating the reaction system; or

ii) conducting the above thermal imidation in the presence of a dehydrating agent used in chemical imidation.

An optical component may be produced by a common production process. An optical lens may be readily produced by filling a mold with a solution of a polyimide for an optical lens according to this invention or a solution of a polyamic acid as a precursor of the polyimide or casting the solution on a substrate with a shape of the optical lens, and then conducting imidation or deprotection under a high-temperature atmosphere. A thermoplastic polyimide may be formed into an optical lens by, for example, injection molding of the polyimide into a mold with a shape of the optical lens. Alternatively, a cylindrical or planar polyimide resin, irrespective of thermoplastic or not, may be cut or polished into an optical lens.

The polyimide optical component obtained as described above may be used as it is or used after protecting its surface. The surface may be protected with, for example, a commonly used cover coating material or a cover glass. When protecting with a cover glass, it may be attached by a commonly used technique such as adhesion with an adhesive and thermocompression bonding by heating.

In the process of this invention, when using the structure represented by general formula (7) or (8) to which a crosslinking structure may be introduced, a polyimide resin molding is heated to initiate crosslinking.

An optical component made of a polyimide according to this invention may be produced by heating a crosslinker-containing polyimide. As used herein, the term "heating" means that in the chemical reaction, a carbon-carbon double or triple bond in the crosslinker-containing dicarboxylic anhydride introduced in the molecular end is subject to thermal reaction to form a crosslink between molecular chains. There are no limitations to a temperature, a time or a pressure of heating, but typical ranges will be described below.

A heating temperature may be generally about 250 to 350 °C, preferably about 250 to 330 °C, most preferably about 260 to 300 °C in the light of practical operation. If it is lower than 250 °C, the crosslinking reaction may not be initiated. If it is higher than 350 °C, a crosslinked polyimide may be easily changed into undesirable color so that satisfactory properties cannot be obtained as an optical lens.

A heating time may vary, depending on other heating conditions, and is generally 0.1 to 100 hours, preferably about 1 to 30 hours, most preferably about 2 to 10 hours. If the heating time is less than 0.1 hours, the crosslinking reaction may inadequately proceed. If it is more than 100 hours, a crosslinked polyimide may be susceptible to deterioration so that satisfactory properties may not be obtained.

A heating pressure may be conveniently an atmospheric pressure, but may be an increased pressure. A heating atmosphere may be, but not limited to, generally the air, nitrogen, helium, neon or argon, preferably nitrogen or argon which is an inert gas.

The thermal crosslinking reaction may be accelerated or inhibited to control a reaction rate by adding an additive including catalysts containing a metal such as gallium, germanium, indium and lead; catalysts containing a transition metal such as molybdenum, manganese, nickel, cadmium, cobalt, chromium, iron, copper, tin and platinum; phosphorous compounds; silicon compounds; nitrogen compounds; and sulfur compounds. For the same purpose, the reaction system may be irradiated with infra red, UV, radiation such as α-, β- and γ-rays, electron beam and X-ray, or may be subject to plasma treatment or doping.

An optical component made of a polyimide resin obtained by heating as described above exhibits good chemical resistance.

Test procedures commonly used in Examples and Comparative Examples are as follows.

Logarithmic viscosity of a polyamic acid ($\eta_{inh}$)

It was determined for a 0.50 g/100 mL sample solution in N,N-dimethylacetamide at 35 °C.

Film formation

A polyimide film was formed by casting a polyamic acid varnish on a glass plate and then heating it at 100 °C for 30 min and at 250 °C for one hour under nitrogen atmosphere for evaporation and imidation.

Film evaluation

A film was prepared from a polyamic acid varnish as described above and then evaluated as described below.

1) Glass transition temperature (Tg)

Determined by DSC at a temperature-programming rate of 16 °C/min.

2) 5 % weight-reduction temperature(Td5)

Determined by DTA-TG at a temperature-programming rate of 10 °C/min.

3) Refractive index (n)

TE value determined using the METRICON prism coupler 2010/633 nm.

4) Birefringence (Δn)

TE-TM value determined using the METRICON prism coupler 2010/633 nm.

5) T% 500 nm

Light transmittance at 500 nm determined using Shimazu UV-3100 PC.

6) T% 420 nm

Light transmittance at 420 nm determined using Shimazu UV-3100 PC.

7) Solvent resistance

Solvent resistance was evaluated by visual observation a 1 cm × 2 cm polyimide film after immersing it in a variety of solvents at room temperature for 24 hours.

Examples

This invention will be more specifically described with reference to, but not limited to, Examples.

Example A

Example A1

In a vessel equipped with a stirrer, a nitrogen inlet tube and a thermometer were placed 36.03 g of 1,3-bis (3-aminophenoxy)-4-trifluoromethylbenzene (0.100 mol) and 194.58 g of N,N-dimethylacetamide as a solvent, and the mixture was stirred for 30 min under a nitrogen atmosphere to prepare a solution. Then, 28.83 g of 3,3',4,4'-biphenyltetracarboxylic dianhydride (0.098 mol) was added in portions, taking care of temperature rise in the solution, and the mixture was stirred at room temperature for 6 hours. A polyamic acid thus obtained had a logarithmic viscosity of 0.69 dl/g. As described above, the polyamic acid varnish thus obtained was used to form a polyimide film, which was then evaluated for thermal and optical properties.

Table A1 shows the amounts of the diamine and the tetracarboxylic dianhydride and the physical properties of the polyamic acid varnish obtained while Table A2 shows the physical properties of the polyimide film.

Examples A2 to A40

Various polyamic acid varnishes were prepared using various diamines and acid anhydrides as described in Example A1. Then, as described above, the polyamic acid varnishes were used to form polyimide films, which were evaluated for thermal and optical properties. Table A1 shows the amounts of the diamines and the tetracarboxylic dianhydrides and the physical properties of the polyamic acid varnishes obtained while Table A2 shows the physical properties of the polyimide films.

Example A41

After preparing a polyamic acid varnish as described in Example A1, 0.59 g of phthalic anhydride (0.004 mol) was added, and the mixture was further stirred for 6 hours. As described above, a polyamic acid varnish thus obtained was used to form a polyimide film, which was evaluated for thermal and optical properties. Table A3 shows the amounts of the diamine, the tetracarboxylic dianhydride and the end capping agent and the physical properties of the polyamic acid varnish obtained while Table A4 shows the physical properties of the polyimide film.

Examples A42 to A80

Various polyamic acid varnishes were prepared using various diamines, acid anhydrides, dicarboxylic anhydrides and aromatic monoamines as described in Example A1. Then, as described above, the polyamic acid varnishes were used to form polyimide films, which were evaluated for thermal and optical properties. Table A3 shows the amounts of the diamines, the tetracarboxylic dianhydrides and the end capping agents and the physical properties of the polyamic acid varnishes obtained while Table A4 shows the physical properties of the polyimide films.

Comparative Examples A1 to A4

Polyimide monomers other than those of this invention were used to prepare polyamic acid varnishes. As described above, the polyamic acid varnishes were used to form polyimide films, which were evaluated for thermal and optical properties. Table A5 shows the amounts of the diamines, the tetracarboxylic dianhydrides and the end capping agents and the physical properties of the polyamic acid varnishes obtained while Table A6 shows the physical properties of the polyimide films.

The basic physical properties for these polyimide films indicate that a polyimide resin according to this invention is useful as an optical component.

The diamines, the tetracarboxylic dianhydrides, the monoamines and the dicarboxylic anhydrides used in the above examples and comparative examples are represented by the following abbreviations.

3,4'-ODA-$CF_3$: 3,4'-diamino-2'-trifluoromethyldiphenyl ether;
4,4'-ODA-$CF_3$: 4,4'-diamino-2'-trifluoromethyldiphenyl ether;
APB-$CF_3$-1: 1,3-bis(3-aminophenoxy)-4-trifluoromethylbenzene;
APB-$CF_3$-2: 1,3-bis(3-aminophenoxy)-5-trifluoromethylbenzene;
APB-CN: 2,6-bis(3-aminophenoxy)benzonitrile;
APB-Cl: 1,3-bis(3-aminophenoxy)-5-chlorobenzene;
APB-Br: 1,3-bis(3-aminophenoxy)-5-bromobenzene;
APB-2$CF_3$: 3-bis(3-amino-5-trifluoromethylphenoxy)benzene;
APB-3$CF_3$: 1,3-bis(3-amino-5-trifluoromethylphenoxy)-4-trifluoromethylbenzene;
p-BP-$CF_3$: 4,4'-bis(4-amino-2-trifluoromethylphenoxy)biphenyl;
m-BP-$CF_3$: 4,4'-bis(3-amino-5-trifluoromethylphenoxy)biphenyl;
p-BO-$CF_3$: bis[4-(4-amino-2-trifluoromethylphenoxy)phenyl] ether;
m-BO-$CF_3$: bis[4-(3-amino-5-trifluoromethylphenoxy)phenyl] ether;
PAPS-$CF_3$: bis[4-(4-amino-2-trifluoromethylphenoxy)phenyl]sulfide;
MAPS-$CF_3$: bis[4-(3-amino-5-trifluoromethylphenoxy)phenyl]sulfide;
p-BS-$CF_3$: bis[4-(4-amino-2-trifluoromethylphenoxy)phenyl]sulfone;
m-BS-$CF_3$: bis[4-(3-amino-5-trifluoromethylphenoxy)phenyl]sulfone;
p-CO-$CF_3$: bis[4-(4-amino-2-trifluoromethylphenoxy)phenyl] ketone;
m-CO-$CF_3$: bis[4-(3-amino-5-trifluoromethylphenoxy)phenyl] ketone;
6F-BAPP-$CF_3$-1: 2,2-bis[4-(4-amino-2-trifluoromethylphenoxy)phenyl]-1,1,1,3,3,3-hexafluoropropane;
6F-BAPP-$CF_3$-2: 2,2-bis[4-(3-amino-5-trifluoromethylphenoxy)phenyl]-1,1,1,3,3,3-hexafluoropropane;
PA: phthalic anhydride;
PPA: 4-phenylphthalic anhydride;
DPEA: 3,4-diphenyl etherdicarboxylic anhydride;
NDA: 1,8-naphthalenedicarboxylic anhydride;
AN: aniline;
ClAN: 4-chloroaniline;
MAN: 4-methylaniline;
ABP: 4-aminobiphenyl.

Table A1

| Ex. A | Diamine g(mol) | Carboxylic Anhydride g(mol) | End capping Agent*1) g(mol) | η inh (dl/g) |
|---|---|---|---|---|
| 1 | APB-CF3-1<br>36.03(0.100) | BPDA<br>28.83(0.098) | none | 0. 69 |
| 2 | ↑ | ODPA<br>30.40(0.098) | ↑ | 0. 53 |
| 3 | ↑ | 6FDA<br>43.54(0.098) | ↑ | 0. 45 |
| 4 | ↑ | DSDA<br>35.11(0.098) | ↑ | 0. 42 |
| 5 | APB-CF3-2<br>36.03(0.100) | BPDA<br>28.83(0.098) | ↑ | 0. 65 |
| 6 | ↑ | ODPA<br>30.40(0.098) | ↑ | 0. 52 |
| 7 | ↑ | 6FDA<br>43.54(0.098) | ↑ | 0. 44 |

Table A1 (continued)

| Ex. A | Diamine g(mol) | Carboxylic Anhydride g(mol) | End capping Agent*1) g(mol) | η inh (dl/g) |
|---|---|---|---|---|
| 8 | ↑ | DSDA 35.11(0.098) | ↑ | 0. 42 |
| 9 | APB-CN 31.74(0.100) | BPDA 28.83(0.098) | ↑ | 0. 64 |
| 10 | ↑ | ODPA 30.40(0.098) | ↑ | 0. 50 |
| 11 | ↑ | 6FDA 43.54(0.098) | ↑ | 0. 42 |
| 12 | ↑ | DSDA 35.11(0.098) | ↑ | 0. 41 |
| 13 | APB-Cl 32.68(0.100) | BPDA 28.83(0.098) | ↑ | 0. 70 |
| 14 | ↑ | ODPA 30.40(0.098) | ↑ | 0. 55 |
| 15 | APB-Br 37.13(0.100) | 6FDA 43.54(0.098) | ↑ | 0. 52 |
| 16 | ↑ | DSDA 35.11(0.098) | ↑ | 0. 50 |
| 17 | APB-2CF3 42.83(0.100) | BPDA 28.83(0.098) | ↑ | 0. 55 |
| 18 | ↑ | ODPA 30.40(0.098) | ↑ | 0. 43 |
| 19 | APB-3CF3 49.63(0.100) | BPDA 28.83(0.098) | ↑ | 0. 52 |
| 20 | ↑ | ODPA 30.40(0.098) | ↑ | 0.40 |
| 21 | 3,4'-ODA-CF3 26.83(0.100) | BPDA 28.83(0.098) | none | 0. 72 |
| 22 | ↑ | ODPA 30.40(0.098) | ↑ | 0. 54 |
| 23 | 4,4'-ODA-CF3 26.83(0.100) | 6FDA 43.54(0.098) | ↑ | 0. 48 |
| 24 | ↑ | DSDA 35.11(0.098) | ↑ | 0. 47 |
| 25 | P-BP-CF3 50.45(0.100) | BPDA 28.83(0.098) | ↑ | 0. 99 |
| 26 | ↑ | ODPA 30.40(0.098) | ↑ | 0. 74 |
| 27 | m-BP-CF3 50.45(0.100) | 6FDA 43.54(0.098) | ↑ | 0. 50 |
| 28 | ↑ | DSDA 35.11(0.098) | ↑ | 0. 55 |
| 29 | p-BO-CF3 52.05(0.100) | BPDA 28.83(0.098) | ↑ | 0. 82 |

Table A1 (continued)

| Ex. A | Diamine g(mol) | Carboxylic Anhydride g(mol) | End capping Agent*1) g(mol) | η inh (dl/g) |
|---|---|---|---|---|
| 30 | ↑ | ODPA 30.40(0.098) | ↑ | 0. 65 |
| 31 | m-BO-CF3 52.05(0.100) | BPDA 28.83(0.098) | ↑ | 0. 70 |
| 32 | ↑ | ODPA 30.40(0.098) | ↑ | 0. 55 |
| 33 | PAPS-CF3 53.65(0.100) | BPDA 28.83(0.098) | ↑ | 0. 87 |
| 34 | MAPS-CF3 53.65(0.100) | ODPA 30.40(0.098) | ↑ | 0. 52 |
| 35 | p-BS-CF3 56.85(0.100) | BPDA 28.83(0.098) | ↑ | 0. 76 |
| 36 | m-BS-CF3 56.85(0.100) | ODPA 30.40(0.098) | ↑ | 0. 51 |
| 37 | p-CO-CF3 53.25(0.100) | BPDA 28.83(0.098) | ↑ | 0. 83 |
| 38 | m-CO-CF3 53.25(0.100) | ODPA 30.40(0.098) | ↑ | 0. 53 |
| 39 | 6P-BAPP-CE3-1 65.45(0.100) | BPDA 28.83(0.098) | ↑ | 0. 61 |
| 40 | 6P-BAPP-CE3-2 65.45(0.100) | ODPA 30.40(0.098) | ↑ | 0. 41 |

Table A2

| Ex. A | Tg (°C) | Td5 (°C) | n | Δn | T% 500nm | T% 420nm |
|---|---|---|---|---|---|---|
| 1 | 213 | 559 | 1. 66 | 0.0043 | 85 | 60 |
| 2 | 182 | 552 | 1. 64 | 0.0038 | 86 | 73 |
| 3 | 210 | 539 | 1.58 | 0.0037 | 86 | 79 |
| 4 | 209 | 540 | 1. 62 | 0.0033 | 84 | 40 |
| 5 | 212 | 556 | 1.67 | 0.0035 | 85 | 61 |
| 6 | 180 | 554 | 1.64 | 0.0034 | 86 | 74 |
| 7 | 208 | 538 | 1. 56 | 0.0036 | 86 | 78 |
| 8 | 205 | 536 | 1.63 | 0.0030 | 85 | 32 |
| 9 | 235 | 555 | 1.69 | 0.0073 | 85 | 57 |
| 10 | 212 | 554 | 1.67 | 0.0060 | 87 | 50 |
| 11 | 232 | 531 | 1.60 | 0.0051 | 86 | 64 |
| 12 | 230 | 535 | 1.65 | 0.0060 | 86 | 40 |
| 13 | 207 | 545 | 1.69 | 0.0049 | 85 | 51 |
| 14 | 176 | 548 | 1.67 | 0.0045 | 86 | 54 |
| 15 | 210 | 542 | 1.69 | 0.0047 | 85 | 52 |
| 16 | 179 | 540 | 1. 67 | 0.0044 | 85 | 55 |

Table A2 (continued)

| Ex. A | Tg (°C) | Td5 (°C) | n | Δn | T% 500nm | T% 420nm |
|---|---|---|---|---|---|---|
| 17 | 196 | 541 | 1.62 | 0.0038 | 86 | 55 |
| 18 | 168 | 543 | 1. 60 | 0.0036 | 85 | 56 |
| 19 | 208 | 534 | 1.58 | 0.0032 | 86 | 60 |
| 20 | 186 | 542 | 1. 56 | 0.0033 | 85 | 61 |
| 21 | 265 | 549 | 1. 66 | 0.0098 | 85 | 38 |
| 22 | 227 | 540 | 1. 64 | 0.0073 | 86 | 51 |
| 23 | 291 | 532 | 1. 57 | 0.0090 | 86 | 42 |
| 24 | 292 | 530 | 1. 63 | 0.0096 | 86 | 30 |
| 25 | 260 | 541 | 1. 64 | 0.0092 | 86 | 35 |
| 26 | 224 | 538 | 1. 61 | 0.0076 | 86 | 45 |
| 27 | 235 | 530 | 1. 56 | 0.0030 | 87 | 75 |
| 28 | 234 | 526 | 1. 60 | 0.0031 | 85 | 58 |
| 29 | 238 | 536 | 1. 64 | 0.0088 | 86 | 48 |
| 30 | 196 | 528 | 1. 61 | 0.0069 | 86 | 50 |
| 31 | 219 | 532 | 1. 62 | 0.0072 | 86 | 58 |
| 32 | 176 | 528 | 1. 59 | 0.0063 | 86 | 68 |
| 33 | 240 | 532 | 1. 65 | 0.0094 | 85 | 35 |
| 34 | 173 | 525 | 1. 60 | 0.0062 | 86 | 62 |
| 35 | 261 | 530 | 1. 64 | 0.0096 | 84 | 45 |
| 36 | 205 | 521 | 1. 58 | 0.0064 | 86 | 48 |
| 37 | 259 | 520 | 1. 64 | 0.0089 | 85 | 38 |
| 38 | 194 | 530 | 1. 59 | 0.0072 | 86 | 45 |
| 39 | 245 | 509 | 1. 62 | 0.0069 | 86 | 43 |
| 40 | 172 | 509 | 1. 58 | 0.0042 | 86 | 67 |

Table A3

| Ex. A | Diamine g(mol) | Carboxylic Anhydride g(mol) | End capping Agent*1) g(mol) | η inh (dl/g) |
|---|---|---|---|---|
| 41 | APB-CF3-1<br>36.03(0.100) | BPDA<br>28.83(0.098) | PA<br>0.59(0.004) | 0. 67 |
| 42 | ↑ | ODPA<br>30.40(0.098) | ↑ | 0. 5 1 |
| 43 | ↑ | 6FDA<br>43.54(0.098) | PPA<br>0.90(0.004) | 0. 44 |
| 44 | ↑ | DSDA<br>35.11(0.098) | DPEA<br>0.96(0.004) | 0. 41 |
| 45 | APB-CF3-2<br>36.03(0.100) | BPDA<br>28.83(0.098) | PA<br>0.59(0.004) | 0. 63 |
| 46 | ↑ | ODPA<br>30.40(0.098) | ↑ | 0. 50 |

Table A3 (continued)

| Ex. A | Diamine g(mol) | Carboxylic Anhydride g(mol) | End capping Agent*1) g(mol) | η inh (dl/g) |
|---|---|---|---|---|
| 47 | ↑ | 6FDA<br>43.54(0.098) | ↑ | 0. 42 |
| 48 | ↑ | DSDA<br>35.11(0.098) | ↑ | 0. 41 |
| 4 9 | APB-CN<br>31.74(0.100) | BPDA<br>28.83(0.098) | ↑ | 0. 6 3 |
| 50 | ↑ | ODPA<br>30.40(0.098) | NDA<br>0.79(0.004) | 0. 47 |
| 51 | APB-CN<br>31.11(0.098) | 6FDA<br>44.43(0.100) | AN<br>0.37(0.004) | 0. 40 |
| 52 | ↑ | DSDA<br>35.83(0.100) | ↑ | 0. 40 |
| 53 | APB-CI<br>32.03(0.098) | BPDA<br>29.42(0.100) | CIAN<br>0.51(0.004) | 0. 67 |
| 54 | ↑ | ODPA<br>31.02(0.100) | MAN<br>0.43(0.004) | 0. 54 |
| 55 | APB-Br<br>36.39(0.098) | 6FDA<br>44.43(0.100) | AN<br>0.37(0.004) | 0. 51 |
| 56 | ↑ | DSDA<br>35.83(0.100) | ↑ | 0. 48 |
| 57 | APB-2CF3<br>41.97(0.098) | BPDA<br>29.42(0.100) | ↑ | 0. 54 |
| 58 | ↑ | ODPA<br>31.02(0.100) | ↑ | 0. 42 |
| 59 | APB-3CF3<br>48.64(0.098) | BPDA<br>29.42(0.100) | ↑ | 0. 51 |
| 60 | ↑ | ODPA<br>31.02(0.100) | ABP<br>0.68(0.004) | 0. 40 |
| 61 | 3,4'-ODA-CF3<br>26.83(0.100) | BPDA<br>28.83(0.098) | PA<br>0.59(0.004) | 0. 71 |
| 62 | ↑ | ODPA<br>30.40(0.098) | ↑ | 0. 52 |
| 63 | 4,4'-ODA-CF3<br>26.83(0.100) | BPDA<br>28.83(0.098) | ↑ | 0. 9 2 |
| 64 | ↑ | DSDA<br>35.11(0. 098) | DPEA<br>0.96(0.004) | 0. 63 |
| 65 | p-BP-CF3<br>50.45(0.100) | BPDA<br>28.83(0.098) | PA<br>0.59(0.004) | 0. 95 |
| 66 | ↑ | BPDA<br>28.83(0.098) | ↑ | 0. 71 |
| 67 | m-BP-CF3<br>50.45(0.100) | ODPA<br>30.40(0.098) | ↑ | 0. 48 |
| 68 | ↑ | BPDA<br>28.83(0.098) | ↑ | 0. 52 |

Table A3 (continued)

| Ex. A | Diamine g(mol) | Carboxylic Anhydride g(mol) | End capping Agent*1) g(mol) | η inh (dl/g) |
|---|---|---|---|---|
| 69 | p-BO-CF3<br>52.05(0.100) | BPDA<br>28.83(0.098) | ↑ | 0. 78 |
| 70 | ↑ | ODPA<br>30.40(0.098) | NDA<br>0.79(0.004) | 0. 64 |
| 71 | m-BO-CF3<br>51.01(0.098) | BPDA<br>29.42(0.100) | AN<br>0.37(0.004) | 0. 68 |
| 72 | ↑ | ODPA<br>31.02(0.100) | ↑ | 0. 54 |
| 73 | PAPS-CF3<br>52.58(0.098) | BPDA<br>29.42(0.100) | CIAN<br>0.51(0.004) | 0. 82 |
| 74 | MAPS-CF3<br>52.58(0.098) | BPDA<br>29.42(0.100) | MAN<br>0.43(0.004) | 0. 50 |
| 75 | P-BS-CF3<br>55.71(0.098) | ODPA<br>31.02(0.100) | AN<br>0.37(0.004) | 0. 74 |
| 76 | m-BS-CF3<br>55.71(0.098) | 6FDA<br>44.42(0.100) | ↑ | 0. 48 |
| 77 | p-CO-CF3<br>52.19(0.098) | BPDA<br>29.42(0.100) | ↑ | 0. 79 |
| 78 | m-CO-CF3<br>52.19(0.098) | BPDA<br>28.83(0.098) | ↑ | 0. 51 |
| 7 9 | 6F-BAPP-CE3-1<br>64.14(0.098) | ODPA<br>31.02(0.100) | ↑ | 0. 60 |
| 80 | 6F-BAPP-CE3-2<br>64.14(0.098) | BPDA<br>29.42(0.100) | ABP<br>0.68(0.004) | 0. 40 |

Table A4

| Ex. A | Tg (°C) | Td5 (°C) | n | Δn | T% 500nm | T% 420nm |
|---|---|---|---|---|---|---|
| 41 | 212 | 560 | 1. 66 | 0.0034 | 85 | 62 |
| 42 | 181 | 559 | 1. 64 | 0.0032 | 86 | 78 |
| 43 | 208 | 544 | 1. 58 | 0.0038 | 86 | 80 |
| 44 | 207 | 550 | 1. 62 | 0.0032 | 85 | 45 |
| 45 | 210 | 562 | 1. 67 | 0.0034 | 86 | 64 |
| 46 | 177 | 560 | 1. 64 | 0.0034 | 86 | 78 |
| 47 | 205 | 545 | 1. 56 | 0.0035 | 85 | 81 |
| 48 | 204 | 544 | 1. 63 | 0.0031 | 86 | 42 |
| 49 | 232 | 560 | 1. 69 | 0.0070 | 85 | 61 |
| 50 | 211 | 559 | 1.67 | 0.0061 | 87 | 55 |
| 51 | 230 | 547 | 1. 60 | 0.0053 | 85 | 68 |
| 52 | 228 | 544 | 1. 65 | 0.0062 | 86 | 43 |
| 53 | 205 | 552 | 1. 69 | 0.0055 | 86 | 55 |
| 54 | 174 | 552 | 1. 67 | 0.0047 | 85 | 59 |

Table A4 (continued)

| Ex. A | Tg (°C) | Td5 (°C) | n | Δn | T% 500nm | T% 420nm |
|---|---|---|---|---|---|---|
| 55 | 208 | 555 | 1. 69 | 0.0049 | 86 | 55 |
| 56 | 175 | 548 | 1. 67 | 0.0045 | 86 | 60 |
| 57 | 192 | 550 | 1. 62 | 0.0040 | 85 | 62 |
| 58 | 166 | 552 | 1. 60 | 0.0038 | 86 | 63 |
| 59 | 205 | 541 | 1. 58 | 0.0033 | 85 | 64 |
| 60 | 184 | 550 | 1. 56 | 0.0035 | 86 | 65 |
| 61 | 263 | 554 | 1. 66 | 0.0096 | 86 | 45 |
| 62 | 225 | 554 | 1. 64 | 0.0070 | 86 | 55 |
| 63 | 290 | 552 | 1. 57 | 0.0086 | 86 | 48 |
| 64 | 288 | 554 | 1. 63 | 0.0095 | 86 | 40 |
| 65 | 256 | 550 | 1. 64 | 0.0081 | 86 | 42 |
| 66 | 222 | 552 | 1. 61 | 0.0073 | 86 | 51 |
| 67 | 231 | 548 | 1. 56 | 0.0030 | 87 | 81 |
| 68 | 231 | 540 | 1. 60 | 0.0030 | 85 | 62 |
| 69 | 237 | 551 | 1. 64 | 0.0086 | 86 | 54 |
| 70 | 195 | 549 | 1. 61 | 0.0065 | 86 | 64 |
| 71 | 217 | 545 | 1. 62 | 0.0071 | 86 | 65 |
| 72 | 175 | 540 | 1. 59 | 0.0061 | 86 | 73 |
| 73 | 238 | 545 | 1. 65 | 0.0092 | 86 | 43 |
| 74 | 170 | 551 | 1. 60 | 0.0061 | 86 | 70 |
| 75 | 258 | 546 | 1. 64 | 0.0093 | 86 | 52 |
| 76 | 203 | 534 | 1. 58 | 0.0063 | 86 | 59 |
| 77 | 257 | 533 | 1. 64 | 0.0088 | 86 | 49 |
| 78 | 192 | 538 | 1. 59 | 0.0070 | 86 | 53 |
| 79 | 244 | 526 | 1. 62 | 0.0068 | 86 | 50 |
| 80 | 170 | 519 | 1. 58 | 0.0040 | 86 | 75 |

Table A5

| Comp. Ex. A | ジアミン g(mol) | 酸無水物 g(mol) | 封止剤 *1) g(mol) | η inh (dl/g) |
|---|---|---|---|---|
| 1 | 4,4'-ODA 20.03(0.100) | PMDA 21.38(0.098) | none | 0. 82 |
| 2 | ↑ | BTDA 31.58(0.098) | ↑ | 0. 73 |
| 3 | 3,3'-DABP 21.23(0.100) | PMDA 21.38(0.098) | ↑ | 0. 60 |
| 4 | ↑ | BTDA 31.58(0.098) | ↑ | 0. 63 |

Table A6

| Comp. Ex. A | Tg (℃) | Td5 (℃) | n | Δn | T% 500nm | T% 420nm |
|---|---|---|---|---|---|---|
| 1 | 不検出 | 552 | 1.67 | 0.1032 | 4 | 0 |
| 2 | 260 | 550 | 1.69 | 0.0820 | 8 | 0 |
| 3 | 不検出 | 549 | 1.65 | 0.1150 | 7 | 0 |
| 4 | 245 | 554 | 1.67 | 0.0980 | 12 | 0 |

These examples and comparative examples show that any of the polyimides according to this invention exhibits a refractive index comparable to that in any polyimide according to comparative examples, but a higher light transmittance and an adequately lower birefringence. Any of the polyimides according to this invention exhibits a glass transition temperature of 150 °C or higher and a 5 % weight-reduction temperature of 500 °C or higher, indicating that it is useful as a heat-resisting lens.

Example B

Example B1

In a vessel equipped with a stirrer, a nitrogen inlet tube and a thermometer were placed 20.03 g of 3,3'-diaminodiphenyl ether (0.100 mol) and 146.58 g of N,N-dimethylacetamide as a solvent, and the mixture was stirred for 30 min under a nitrogen atmosphere to prepare a solution. Then, 28.83 g of 3,3',4,4'-biphenyltetracarboxylic dianhydride (0.098 mol) was added in portions, taking care of temperature rise in the solution, and the mixture was stirred at room temperature for 6 hours. A polyamic acid thus obtained had a logarithmic viscosity of 0.72 dl/g.
As described above, the polyamic acid varnish thus obtained was used to form a polyimide film, which was then evaluated for thermal and optical properties.
Table B1 shows the amounts of the diamine and the tetracarboxylic dianhydride and the physical properties of the polyamic acid varnish obtained while Table B2 shows the physical properties of the polyimide film.

Examples B2 to B40

Various polyamic acid varnishes were prepared using various diamines and acid anhydrides as described in Example B1. Then, as described above, the polyamic acid varnishes were used to form polyimide films, which were evaluated for thermal and optical properties. Table B1 shows the amounts of the diamines and the tetracarboxylic dianhydrides and the physical properties of the polyamic acid varnishes obtained while Table B2 shows the physical properties of the polyimide films.

Example B41

After preparing a polyamic acid varnish as described in Example B1, 0.59 g of phthalic anhydride (0.004 mol) was added, and the mixture was further stirred for 6 hours. As described above, a polyamic acid varnish thus obtained was used to form a polyimide film, which was evaluated for thermal and optical properties. Table B3 shows the amounts of the diamine, the tetracarboxylic dianhydride and the end capping agent and the physical properties of the polyamic acid varnish obtained while Table B4 shows the physical properties of the polyimide film.

Examples B42 to B80

Various polyamic acid varnishes were prepared using various diamines, acid anhydrides, dicarboxylic anhydrides and aromatic monoamines as described in Example B1. Then, as described above, the polyamic acid varnishes were used to form polyimide films, which were evaluated for thermal and optical properties. Table B3 shows the amounts of the diamines, the tetracarboxylic dianhydrides and the end capping agents and the physical properties of the polyamic acid varnishes obtained while Table B4 shows the physical properties of the polyimide films.

Comparative Examples B1 to B4

Polyimide monomers other than those of this invention were used to prepare polyamic acid varnishes. As described above, the polyamic acid varnishes were used to form polyimide films, which were evaluated for thermal and optical properties. Table B5 shows the amounts of the diamines, the tetracarboxylic dianhydrides and the end capping agents and the physical properties of the polyamic acid varnishes obtained while Table B6 shows the physical properties of the polyimide films.

The diamines, the tetracarboxylic dianhydrides, the monoamines and the dicarboxylic anhydrides used in the above examples and comparative examples are represented by the following abbreviations.

4,4'-ClBP: 4,4'-diamino-2,2'-dichlorobiphenyl;
4,4'-$CF_3$BP: 4,4'-diamino-2,2'-ditrifluoromethylbiphenyl;
4,4'-$CH_3$BP: 4,4'-diamino-3,3'-dimethylbiphenyl;
3,3'-ODA: 3,3'-diaminodiphenyl ether;
3,4'-ODA: 3,4'-diaminodiphenyl ether;
4,4'-ODA: 4,4'-diaminodiphenyl ether;
3,3'-$DASO_2$: 3,3'-diaminodiphenylsulfone;
4,4'-$DASO_2$: 4,4'-diaminodiphenylsulfide;
3,3'-DAS: 3,3'-diaminodiphenylsulfide;
3,3'-MDA: 3,3'-diaminodiphenylmethane;
3,3'-DABP: 3,3'-diaminobenzophenone;
APB: 1,3-bis(3-aminophenoxy)benzene;
pm-APB: 1,3-bis(4-aminophenoxy)benzene;
mp-APB: 1,4-bis(3-aminophenoxy)benzene;
pp-APB: 1,4-bis(4-aminophenoxy)benzene;
m-BP: 4,4'-bis(3-aminophenoxy)biphenyl;
p-BP: 4,4'-bis(4-aminophenoxy)biphenyl;
MAPS: bis[4-(3-aminophenoxy)phenyl]sulfide;
m-BS: bis[4-(3-aminophenoxy)phenyl]sulfone;
m-BO: bis[4-(3-aminophenoxy)phenyl] ether;
m-CO: bis[4-(3-aminophenoxy)phenyl] ketone;
m-BAPP: 2,2-bis[4-(3-aminophenoxy)phenyl]propane;
6F-BAPP: 2,2-bis[3-(3-aminophenoxy)phenyl]-1,1,3,3,3,3-hexafluoropropane;
PA: phthalic anhydride;
PPA: 4-phenylphthalic anhydride;
DPEA: 3,4-diphenyl etherdicarboxylic anhydride;
NDA: 1,8-naphthalenedicarboxylic anhydride;
AN: aniline;
ClAN: 4-chloroaniline;
MAN: 4-methylaniline;
ABP: 4-aminobiphenyl.

Table B1

| Ex. B | Diamine g(mol) | Carboxylic Anhydride g(mol) | End capping Agent*1) g(mol) | η inh (dl/g) |
|---|---|---|---|---|
| 1 | 3, 3' -ODA 20.03(0.100) | BPDA 28.83(0.098) | none | 0. 72 |
| 2 | ↑ | ODPA 30.40(0.098) | ↑ | 0. 54 |
| 3 | 3, 4' -ODA 20.03(0.100) | 6FDA 43.54(0.098) | ↑ | 0. 53 |
| 4 | ↑ | ODPA 30.40(0.098) | ↑ | 0. 57 |
| 5 | 4, 4' -ODA 20.03(0.100) | 6FDA 43.54(0.098) | ↑ | 0. 65 |

Table B1 (continued)

| Ex. B | Diamine g(mol) | Carboxylic Anhydride g(mol) | End capping Agent*1) g(mol) | η inh (dl/g) |
|---|---|---|---|---|
| 6 | ↑ | ODPA 30.40(0.098) | ↑ | 0. 72 |
| 7 | 4,4'-CIBP 25.31(0.100) | BPDA 28.83(0.098) | ↑ | 0. 95 |
| 8 | ↑ | ODPA 30.40(0.098) | ↑ | 0. 63 |
| 9 | 4,4'-CF3BP 32.03(0.100) | 6FDA 43.54(0.098) | ↑ | 0. 51 |
| 10 | ↑ | DSDA 35.11(0.098) | ↑ | 0. 42 |
| 11 | 4,4'-CH3BP 21.23(0.100) | ODPA 30.40(0.098) | ↑ | 0. 64 |
| 12 | ↑ | 6FDA 43.54(0.098) | ↑ | 0. 43 |
| 13 | 3,3'-DAS02 24.83(0.100) | BPDA 28.83(0.098) | ↑ | 0. 59 |
| 14 | ↑ | ODPA 30.40(0.098) | ↑ | 0. 40 |
| 15 | 4.4'-DAS02 24.83(0.100) | BPDA 28.83(0.098) | ↑ | 0. 86 |
| 16 | ↑ | DSDA 35.11(0.098) | ↑ | 0. 45 |
| 17 | 3,3'-DAS 21.63(0.100) | BPDA 28.83(0.098) | ↑ | 0. 85 |
| 18 | ↑ | ODPA 30.40(0.098) | ↑ | 0. 62 |
| 19 | 4,4'-MDA 19.83(0.100) | BPDA 28.83(0.098) | ↑ | 0. 72 |
| 20 | 3,3'-DABP 21.23(0.100) | ODPA 30.40(0.098) | ↑ | 0.45 |
| 21 | APB 29.24(0.100) | BPDA 28.83(0.098) | ↑ | 0. 63 |
| 22 | ↑ | ODPA 30.40(0.098) | ↑ | 0. 51 |
| 23 | pm-APB 29.24(0.100) | 6FDA 43.54(0.098) | ↑ | 0. 43 |
| 24 | ↑ | ODPA 30.40(0.098) | ↑ | 0. 52 |
| 25 | mp-APB 29.24(0.100) | BPDA 28.83(0.098) | ↑ | 0. 63 |
| 26 | ↑ | ODPA 30.40(0.098) | ↑ | 0. 51 |
| 27 | pp-APB 29.24(0.100) | DSDA 35.11(0.098) | ↑ | 0. 47 |

Table B1 (continued)

| Ex. B | Diamine g(mol) | Carboxylic Anhydride g(mol) | End capping Agent*1) g(mol) | η inh (dl/g) |
|---|---|---|---|---|
| 28 | ↑ | 6FDA 43.54(0.098) | ↑ | 0. 76 |
| 29 | m-BP 36.85(0.100) | BPDA 28.83(0.098) | ↑ | 0. 68 |
| 30 | ↑ | ODPA 30.40(0.098) | ↑ | 0. 51 |
| 31 | p-BP 36.85(0.100) | ODPA 30.40(0.098) | ↑ | 0. 62 |
| 32 | MAPS 40.05(0.100) | BPDA 28.83(0.098) | ↑ | 0. 67 |
| 33 | ↑ | ODPA 30.40(0.098) | ↑ | 0. 51 |
| 34 | m-BS 43.25(0.100) | BPDA 28.83(0.098) | ↑ | 0. 66 |
| 35 | ↑ | ODPA 30.40(0.098) | ↑ | 0. 54 |
| 36 | m-BO 38.45(0.100) | BPDA 28.83(0.098) | ↑ | 0. 60 |
| 37 | ↑ | ODPA 30.40(0.098) | ↑ | 0. 43 |
| 38 | m-CO 39.65(0.100) | BPDA 28.83(0.098) | ↑ | 0. 68 |
| 39 | m-BAPP 41.06(0.100) | ODPA 30.40(0.098) | ↑ | 0. 57 |
| 40 | 6F-BAPP 51.85(0.100) | ODPA 30.40(0.098) | ↑ | 0. 43 |

Table B2

| Ex. B | Tg (°C) | Td5 (°C) | n | T% 500nm | T% 420nm |
|---|---|---|---|---|---|
| 1 | 242 | 547 | 1.71 | 85 | 48 |
| 2 | 220 | 549 | 1.68 | 86 | 60 |
| 3 | 265 | 538 | 1.63 | 86 | 52 |
| 4 | 231 | 537 | 1. 67 | 85 | 49 |
| 5 | none | 542 | 1. 63 | 85 | 40 |
| 6 | 249 | 545 | 1. 68 | 85 | 32 |
| 7 | none | 554 | 1.72 | 82 | 31 |
| 8 | 280 | 556 | 1. 68 | 84 | 40 |
| 9 | 320 | 530 | 1. 61 | 86 | 63 |
| 10 | 275 | 553 | 1. 64 | 86 | 52 |
| 11 | 278 | 547 | 1. 69 | 84 | 42 |
| 12 | 330 | 530 | 1. 61 | 85 | 50 |
| 13 | 280 | 542 | 1. 69 | 87 | 80 |

Table B2 (continued)

| Ex. B | Tg (°C) | Td5 (°C) | n | T% 500nm | T% 420nm |
|---|---|---|---|---|---|
| 14 | 251 | 538 | 1. 65 | 85 | 64 |
| 15 | none | 545 | 1. 72 | 86 | 68 |
| 16 | 280 | 531 | 1. 64 | 85 | 43 |
| 17 | 250 | 537 | 1. 70 | 85 | 39 |
| 18 | 223 | 540 | 1. 64 | 85 | 40 |
| 19 | 278 | 520 | 1. 68 | 84 | 30 |
| 20 | 229 | 539 | 1. 64 | 84 | 33 |
| 21 | 203 | 547 | 1.69 | 85 | 52 |
| 22 | 172 | 548 | 1.67 | 86 | 54 |
| 23 | 238 | 526 | 1.61 | 85 | 54 |
| 24 | 204 | 530 | 1.65 | 86 | 45 |
| 25 | 218 | 545 | 1.68 | 85 | 44 |
| 26 | 184 | 542 | 1.67 | 86 | 49 |
| 27 | 270 | 523 | 1.68 | 85 | 32 |
| 28 | 281 | 530 | 1. 64 | 85 | 45 |
| 29 | 234 | 548 | 1.70 | 86 | 60 |
| 30 | 212 | 540 | 1.67 | 87 | 64 |
| 31 | 253 | 520 | 1.69 | 86 | 38 |
| 32 | 202 | 538 | 1.70 | 83 | 32 |
| 33 | 179 | 520 | 1.69 | 86 | 60 |
| 34 | 242 | 530 | 1.68 | 86 | 60 |
| 35 | 215 | 528 | 1.67 | 86 | 55 |
| 36 | 209 | 519 | 1.69 | 86 | 38 |
| 37 | 185 | 509 | 1.67 | 87 | 70 |
| 38 | 215 | 520 | 1. 68 | 86 | 48 |
| 39 | 205 | 515 | 1. 66 | 86 | 54 |
| 40 | 214 | 520 | 1. 58 | 87 | 63 |

Table B3

| Ex. B | ジアミン g(mol) | 酸無水物 g(mol) | 封止剤 *1) g(mol) | ηinh (dl/g) |
|---|---|---|---|---|
| 41 | 3, 3'-ODA 20.03(0.100) | BPDA 28.83(0.098) | PA 0.59(0.004) | 0.70 |
| 42 | ↑ | ODPA 30.40(0.098) | ↑ | 0.51 |
| 43 | 3, 4'-ODA 20.03(0.100) | 6FDA 43.54(0.098) | PPA 0.90(0.004) | 0.51 |
| 44 | ↑ | ODPA 30.40(0.098) | DPEA 0.96(0.004) | 0.55 |
| 45 | 4, 4'-ODA 20.03(0.100) | 6FDA 43.54(0.098) | PA 0.59(0.004) | 0.61 |
| 46 | ↑ | ODPA 30.40(0.098) | ↑ | 0.70 |
| 47 | 4,4'-ClBP 25.31(0.100) | BPDA 28.83(0.098) | ↑ | 0.90 |
| 48 | ↑ | ODPA 30.40(0.098) | ↑ | 0.61 |
| 49 | 4,4'-CF3BP 32.03(0.100) | 6FDA 43.54(0.098) | ↑ | 0.48 |
| 50 | ↑ | DSDA 35.11(0.098) | NDA 0.79(0.004) | 0.41 |
| 51 | 4,4'-CH3BP 20.81(0.098) | ODPA 30.40(0.098) | AN 0.37(0.004) | 0.61 |
| 52 | ↑ | 6FDA 43.54(0.098) | ↑ | 0.41 |
| 53 | 3,3'-DASO2 24.33(0.098) | BPDA 28.83(0.098) | ClAN 0.51(0.004) | 0.55 |
| 54 | ↑ | ODPA 30.40(0.098) | MAN 0.43(0.004) | 0.40 |
| 55 | 4,4'-DASO2 24.33(0.098) | BPDA 28.83(0.098) | AN 0.37(0.004) | 0.81 |
| 56 | ↑ | DSDA 35.11(0.098) | ↑ | 0.42 |
| 57 | 3,3'-DAS 21.20(0.098) | BPDA 28.83(0.098) | ↑ | 0.82 |
| 58 | ↑ | ODPA 30.40(0.098) | ↑ | 0.60 |
| 59 | 4,4'-MDA 19.43(0.098) | BPDA 28.83(0.098) | ↑ | 0.68 |
| 60 | 3,3'-DABP 20.81(0.098) | ODPA 30.40(0.098) | ABP 0.68(0.004) | 0.42 |

Table B3 (continued)

| Ex. B | Diamine g(mol) | Carboxylic Anhydride g(mol) | End capping Agent*1) g(mol) | η inh (dl/g) |
|---|---|---|---|---|
| 61 | APB 29.24(0.100) | BPDA 28.83(0.098) | PA 0.59(0.004) | 0.61 |
| 62 | ↑ | ODPA 30.40(0.098) | ↑ | 0.48 |
| 63 | pm-APB 29.24(0.100) | 6FDA 43.54(0.098) | ↑ | 0.42 |
| 64 | ↑ | ODPA 30.40(0.098) | DPEA 0.96(0.004) | 0.51 |
| 65 | mp-APB 29.24(0.100) | BPDA 28.83(0.098) | PA 0.59(0.004) | 0.61 |
| 66 | ↑ | ODPA 30.40(0.098) | ↑ | 0.49 |
| 67 | pp-APB 29.24(0.100) | DSDA 35.11(0.098) | ↑ | 0.46 |
| 68 | ↑ | 6FDA 43.54(0.098) | ↑ | 0.74 |
| 69 | m-BP 36.85(0.100) | BPDA 28.83(0.098) | ↑ | 0.65 |
| 70 | ↑ | ODPA 30.40(0.098) | NDA 0.79(0.004) | 0.50 |
| 71 | p-BP 36.11(0.098) | ODPA 31.02(0.100) | AN 0.37(0.004) | 0.61 |
| 72 | MAPS 39.25(0.098) | BPDA 29.42(0.100) | ↑ | 0.65 |
| 73 | ↑ | ODPA 31.02(0.100) | ClAN 0.51(0.004) | 0.49 |
| 74 | m-BS 42.39(0.098) | BPDA 29.42(0.100) | MAN 0.43(0.004) | 0.64 |
| 75 | ↑ | ODPA 31.02(0.100) | AN 0.37(0.004) | 0.52 |
| 76 | m-BO 37.68(0.098) | BPDA 29.42(0.100) | ↑ | 0.57 |
| 77 | ↑ | ODPA 31.02(0.100) | ↑ | 0.41 |
| 78 | m-CO 38.86(0.098) | BPDA 29.42(0.100) | ↑ | 0.65 |
| 79 | m-BAPP 40.24(0.098) | ODPA 31.02(0.100) | ↑ | 0.55 |
| 80 | 6F-BAPP 50.81(0.098) | ODPA 31.02(0.100) | ABP 0.68(0.004) | 0.41 |

Table B4

| Ex. B | Tg (°C) | Td5 (°C) | n | T% 500nm | T% 420nm |
|---|---|---|---|---|---|
| 41 | 240 | 552 | 1. 71 | 86 | 52 |
| 42 | 216 | 556 | 1. 68 | 86 | 64 |

Table B4 (continued)

| Ex. B | Tg (°C) | Td5 (°C) | n | T% 500nm | T% 420nm |
|---|---|---|---|---|---|
| 43 | 261 | 540 | 1. 63 | 86 | 57 |
| 44 | 227 | 543 | 1. 67 | 86 | 51 |
| 45 | none | 555 | 1. 63 | 85 | 41 |
| 46 | 245 | 552 | 1. 68 | 85 | 38 |
| 47 | none | 557 | 1. 72 | 83 | 33 |
| 48 | 277 | 558 | 1. 68 | 84 | 42 |
| 49 | 316 | 535 | 1. 61 | 86 | 68 |
| 50 | 272 | 555 | 1. 64 | 86 | 58 |
| 51 | 272 | 550 | 1. 69 | 85 | 45 |
| 52 | 324 | 535 | 1. 61 | 85 | 55 |
| 53 | 277 | 546 | 1. 69 | 87 | 82 |
| 54 | 250 | 543 | 1. 65 | 85 | 65 |
| 55 | none | 548 | 1. 72 | 86 | 69 |
| 56 | 276 | 538 | 1. 64 | 85 | 46 |
| 57 | 248 | 542 | 1. 70 | 85 | 43 |
| 58 | 220 | 546 | 1. 64 | 85 | 45 |
| 59 | 275 | 527 | 1. 68 | 84 | 35 |
| 60 | 226 | 542 | 1. 64 | 84 | 38 |
| 61 | 200 | 553 | 1. 69 | 85 | 57 |
| 62 | 170 | 552 | 1. 67 | 86 | 64 |
| 63 | 234 | 536 | 1. 61 | 85 | 57 |
| 64 | 202 | 541 | 1. 65 | 86 | 49 |
| 65 | 215 | 552 | 1. 68 | 85 | 46 |
| 66 | 181 | 548 | 1. 67 | 86 | 53 |
| 67 | 267 | 535 | 1. 68 | 85 | 37 |
| 68 | 276 | 535 | 1. 64 | 85 | 48 |
| 69 | 230 | 552 | 1. 70 | 86 | 61 |
| 70 | 210 | 555 | 1. 67 | 87 | 68 |
| 71 | 249 | 531 | 1. 69 | 86 | 39 |
| 72 | 200 | 542 | 1. 70 | 83 | 34 |
| 73 | 176 | 533 | 1. 69 | 86 | 62 |
| 74 | 240 | 539 | 1. 68 | 86 | 62 |
| 75 | 213 | 532 | 1. 67 | 86 | 56 |
| 76 | 205 | 523 | 1. 69 | 86 | 40 |
| 77 | 183 | 518 | 1. 67 | 87 | 73 |
| 78 | 212 | 532 | 1. 68 | 86 | 52 |
| 79 | 201 | 519 | 1. 66 | 86 | 58 |
| 80 | 213 | 531 | 1. 58 | 87 | 65 |

Table B5

| Comp. Ex. B | Diamine g(mol) | Carboxylic Anhydride g(mol) | End capping Agent*1) g(mol) | η inh (dl/g) |
|---|---|---|---|---|
| 1 | 4,4'-ODA 20.03(0.100) | PMDA 21.38(0.098) | 無し | 0. 82 |
| 2 | ↑ | BTDA 31.58(0.098) | ↑ | 0. 73 |
| 3 | 3,3'-DABP 21.23(0.100) | PMDA 21.38(0.098) | ↑ | 0. 60 |
| 4 | ↑ | BTDA 31.58(0.098) | ↑ | 0. 63 |

Table B6

| Comp. Ex. B | Tg (°C) | Td5 (°C) | n | T% 500nm | T% 420nm |
|---|---|---|---|---|---|
| 1 | none | 552 | 1. 67 | 4 | 0 |
| 2 | 260 | 550 | 1.69 | 8 | 0 |
| 3 | none | 549 | 1. 65 | 7 | 0 |
| 4 | 245 | 554 | 1. 67 | 12 | 0 |

These examples and comparative examples show that any of the polyimides according to this invention exhibits a refractive index comparable to that in any polyimide according to comparative examples, but a higher light transmittance. Any of the polyimides according to this invention exhibits a glass transition temperature of 150 °C or higher and a 5 % weight-reduction temperature of 500 °C or higher, indicating that it is useful as a heat-resisting microlens, intraocular lens or optical filter.

As described above, this invention can provide a polyimide optical microlens exhibiting good physical properties inherent to a polyimide, i.e., heat resistance, mechanical properties, sliding properties, low water absorptivity, electric properties, thermal oxidation stability, chemical resistance and radiation resistance, as well as good transparency and a high refractive index.

Example C

Example C1

In a vessel equipped with a stirrer and a nitrogen inlet tube were placed 10.02 g of 3,3'-diaminodiphenyl ether (0.05 mol) and 73.29 g of N,N-dimethylacetamide, and the mixture was stirred under a nitrogen atmosphere for 30 min. Then, 14.42 g of 3,3',4,4'-biphenyltetracarboxylic dianhydride (0.049 mol) was added in portions, taking care of temperature rise in the solution, and the mixture was stirred at room temperature for 6 hours. Then, 0.20 g of maleic anhydride (0.002 mol) was added, and the mixture was stirred for additional 10 hours to give a polyamic acid solution with a logarithmic viscosity of 0.68 dl/g.

An aliquot of the polyamic acid solution was casted on a glass plate, which was then heated at 100 °C for 1 hour, 200 °C for 1 hour and 250 °C for 1 hour to form polyimide film-1 (for evaluating thermal properties, a light transmittance and solvent resistance).

The polyamic acid varnish was spin-coated on a silicon wafer, which was then heated at 100 °C for 1 hour, 200 °C for 1 hour and 250 °C for 1 hour to form polyimide film-2 (for determining a refractive index).

The polyimide films-1 and -2 (collectively referred to as "polyimide films") were further heated at 280 °C to form heat-treated polyimide films-1 and -2 (collectively referred to as "heat-treated polyimide films").

These polyimide and heat-treated polyimide films were evaluated for thermal properties, optical properties and chemical resistance. Table C1 shows the evaluation results.

Examples C2 and C3

As described above, the polyamic acid varnish prepared in Example C1 was used to form a polyimide film, which was then evaluated for various properties as described in Example C1, except that the film was heated at 300 °C and 320 °C. The evaluation results are shown in Table C1.

Examples C4 to C84

Polyamic acid varnishes were prepared and evaluated for various properties as described in Examples C1 to C3, except that the identities and the amounts of diamines, tetracarboxylic dianhydrides and dicarboxylic anhydrides used were as shown in Table C1 and heating was conducted at temperatures indicated in Table C1. The results are shown in Table C1.

Comparative Examples C1 and C2 (Referential Examples)

A polyamic acid varnish and a polyimide film were prepared as described in Example C1 without using a dicarboxylic anhydride. The polyimide film thus obtained was heated at a temperature shown in Table C2 to form a heat-treated polyimide film. Table C2 shows the physical properties of the polyamic acid varnish and the test results.

Comparative Examples C3 and C4 (Referential Examples)

A polyamic acid varnish and a polyimide film were prepared as described in Example C1 using phthalic anhydride as a dicarboxylic anhydride. The polyimide film thus obtained was heated at a temperature shown in Table C2 to form a heat-treated polyimide film. Table C2 shows the physical properties of the polyamic acid varnish and the test results.

Comparative Examples C5 to C8 (Referential Examples)

Table C2 shows the physical properties of polyamic acid varnishes obtained by heating at a temperature departing from the range in this invention.

Comparative Examples C9 and C10

Polyamic acid varnishes were prepared using polyimide monomers other than those in this invention. As described above, the polyamic acid varnishes were used to form polyimide films and heat-treated polyimide films. Table C2 shows various test results.

Table C1(1)

| Ex. | Diamine g(mol) | Tetracarboxylic dianhydride g(mol) | Dicarboxylic anhydride g(mol) | $\eta_{inh}$ (dl/g) | Heating temp. (°C) | Tg (°C) | Td5 (°C) | n | Δn | T%500 (%) | T%420 (%) | Solvent resistance |
|---|---|---|---|---|---|---|---|---|---|---|---|---|
| 1 | 3,3'-ODA 10.02 (0.050) | BPDA 14.42 (0.049) | MA 0.20 (0.002) | 0.68 | 280 | 240 | 547 | 1.71 | 0.0072 | 84 | 45 | Acetone : O DMF: O $CHCl_3$: O |
| 2 | Using the polyamic acid in Example 1 | | | | 300 | 241 | 545 | 1.71 | 0.0069 | 79 | 41 | Acetone : O DMF: O $CHCl_3$: O |
| 3 | Using the polyamic acid in Example 1 | | | | 320 | 241 | 545 | 1.71 | 0.0070 | 76 | 38 | Acetone : O DMF: O $CHCl_3$: O |
| 4 | 3,3'-ODA 10.02 (0.050) | ODPA 15.20 (0.049) | MA 0.20 (0.002) | 0.54 | 280 | 220 | 550 | 1.68 | 0.0064 | 84 | 58 | Acetone : O DMF: O $CHCl_3$: O |
| 5 | Using the polyamic acid in Example 4 | | | | 300 | 220 | 551 | 1.68 | 0.0062 | 80 | 53 | Acetone : O DMF: O $CHCl_3$: O |
| 6 | Using the polyamic acid in Example 4 | | | | 320 | 220 | 548 | 1.68 | 0.0066 | 76 | 49 | Acetone : O DMF: O $CHCl_3$: O |
| 7 | 3,3'-ODA 10.02 (0.050) | 6FDA 21.77 (0.049) | MA 0.20 (0.002) | 0.32 | 280 | 2.38 | 504 | 1.61 | 0.0052 | 86 | 78 | Acetone : O DMF: O $CHCl_3$: O |
| 8 | Using the polyamic acid in Example 7 | | | | 300 | 238 | 503 | 1.61 | 0.0051 | 80 | 73 | Acetone : O DMF: O $CHCl_3$: O |
| 9 | Using the polyamic acid in Example 7 | | | | 320 | 240 | 504 | 1.61 | 0.0050 | 77 | 69 | Acetone : O DMF: O $CHCl_3$: O |
| 10 | 4,4'-ODA 10.02 (0.050) | ODPA 15.20 (0.049) | MA 0.20( 0 .002) | 0.69 | 280 | 249 | 545 | 1.68 | 0.0523 | 83 | 30 | Acetone : O DMF: O $CHCl_3$: O |
| 11 | Using the polyamic acid in Example 10 | | | | 300 | 249 | 544 | 1.68 | 0.0513 | 78 | 24 | Acetone : O DMF: O $CHCl_3$: O |

| | | | | | | | | | | | |
|---|---|---|---|---|---|---|---|---|---|---|---|
| 12 | Using the polyamic acid in Example 10 | | | | 320 | 250 | 545 | 1.68 | 0.0519 | 74 | 20 | Acetone : O<br>DMF: O<br>$CHCl_3$: O |
| 13 | 4,4'-CIBP 12.66 (0.050) | ODPA 15.20 (0.049) | MA 0.20 (0.002) | 0.61 | 280 | 280 | 555 | 1.68 | 0.0398 | 83 | 40 | Acetone : O<br>DMF: O<br>$CHCl_3$: O |
| 14 | Using the polyamic acid in Example 13 | | | | 300 | 280 | 554 | 1.68 | 0.0400 | 79 | 32 | Acetone : O<br>DMF: O<br>$CHCl_3$: O |
| 15 | Using the polyamic acid in Example 13 | | | | 320 | 280 | 554 | 1.68 | 0.0402 | 75 | 29 | Acetone : O<br>DMF: O<br>$CHCl_3$: O |
| 16 | 4,4'-CF3BP 16.02 (0.050) | ODPA 15.20 (0.049) | MA 0.20 (0.002) | 0.54 | 280 | 355 | 519 | 1.56 | 0.0254 | 88 | 73 | Acetone : O<br>DMF: O<br>$CHCl_3$: O |
| 17 | Using the polyamic acid in Example 16 | | | | 300 | 355 | 520 | 1.56 | 0.0259 | 79 | 68 | Acetone : O<br>DMF: O<br>$CHCl_3$: O |
| 18 | Using the polyamic acid in Example 16 | | | | 320 | 356 | 518 | 1.56 | 0.0255 | 72 | 65 | Acetone : O<br>DMF: O<br>$CHCl_3$: O |
| 19 | 3,3'-DAS 10.82 (0.050) | BPDA 14.42 (0.049) | MA 0.20 (0.002) | 0.83 | 280 | 249 | 539 | 1.70 | 0.0071 | 85 | 41 | Acetone : O<br>DMF: O<br>$CHCl_3$: O |
| 20 | Using the polyamic acid in Example 19 | | | | 300 | 249 | 540 | 1.70 | 0.0069 | 78 | 36 | Acetone : O<br>DMF: O<br>$CHCl_3$: O |
| 21 | Using the polyamic acid in Example 19 | | | | 320 | 250 | 538 | 1.70 | 0.0069 | 74 | 31 | Acetone : O<br>DMF: O<br>$CHCl_3$: O |

Solvent resistance: Left; test solvent, Right; evaluation (Visual observation; O: no changes, Δ: change in a shape, x: dissolved)

Table C1(2) (Continued)

| Ex. | Diamine g(mol) | Tetracarboxylic dianhydride g(mol) | Dicarboxylic anhydride g(mol) | $\eta_{inh}$ (dl/g) | Heating temp. (°C) | Tg (°C) | Td5 (°C) | n | Δn | T%500 (%) | T%420 (%) | Solvent resistance |
|---|---|---|---|---|---|---|---|---|---|---|---|---|
| 22 | APB 14.62 (0.050) | BPDA 14.42 (0.049) | MA 0.20 (0.002) | 0.63 | 280 | 203 | 547 | 1.69 | 0.0053 | 84 | 50 | Acetone : O DMF: O $CHCl_3$: O |
| 23 | Using the polyamic acid in Example 22 | | | | 300 | 203 | 547 | 1.69 | 0.0052 | 78 | 44 | Acetone : O DMF: O $CHCl_3$: O |
| 24 | Using the polyamic acid in Example 22 | | | | 320 | 204 | 550 | 1.69 | 0.0053 | 72 | 40 | Acetone : O DMF: O $CHCl_3$: O |
| 25 | APB-CF3 18.02 (0.050) | BPDA 14.42 (0.049) | MA 0.20 (0.002) | 0.69 | 280 | 213 | 560 | 1.66 | 0.0044 | 83 | 60 | Acetone : O DMF: O $CHCl_3$: O |
| 26 | Using the polyamic acid in Example 25 | | | | 300 | 214 | 558 | 1.66 | 0.0042 | 80 | 53 | Acetone : O DMF: O $CHCl_3$: O |
| 27 | Using the polyamic acid in Example 25 | | | | 320 | 214 | 559 | 1.66 | 0.0043 | 76 | 48 | Acetone : O DMF: O $CHCl_3$: O |
| 28 | APB-CN 15.87 (0.050) | BPDA 14.42 (0.049) | MA 0.20 (0.002) | 0.62 | 280 | 233 | 556 | 1.69 | 0.0071 | 84 | 57 | Acetone : O DMF: O $CHCl_3$: O |
| 29 | Using the polyamic acid in Example 28 | | | | 300 | 234 | 555 | 1.69 | 0.0070 | 79 | 53 | Acetone : O DMF: O $CHCl_3$: O |
| 30 | Using the polyamic acid in Example 28 | | | | 320 | 235 | 554 | 1.69 | 0.0068 | 73 | 46 | Acetone : O DMF: O $CHCl_3$: O |
| 31 | APB-Cl 16.34 (0.050) | BPDA 14.42 (0.049) | MA 0.20 (0.002) | 0.68 | 280 | 206 | 544 | 1.69 | 0.0049 | 83 | 49 | Acetone : O DMF: O $CHCl_3$: O |
| 32 | Using the polyamic acid in Example 31 | | | | 300 | 206 | 543 | 1.69 | 0.0050 | 78 | 42 | Acetone : O DMF: O $CHCl_3$: O |

| | | | | | | | | | | | |
|---|---|---|---|---|---|---|---|---|---|---|---|
| 33 | Using the polyamic acid in Example 31 | | | | 320 | 206 | 544 | 1.69 | 0.0048 | 74 | 38 | Acetone : O<br>DMF: O<br>$CHCl_3$: O |
| 34 | APB-2CF3<br>21.42<br>(0.050) | BPDA<br>14.42<br>(0.049) | MA<br>0.20<br>(0.002) | 0.54 | 280 | 196 | 541 | 1.62 | 0.0038 | 86 | 52 | Acetone : O<br>DMF: O<br>$CHCl_3$: O |
| 35 | Using the polyamic acid in Example 34 | | | | 300 | 196 | 542 | 1.52 | 0.0038 | 80 | 47 | Acetone : O<br>DMF: O<br>$CHCl_3$: O |
| 36 | Using the polyamic acid in Example 34 | | | | 320 | 197 | 539 | 1.62 | 0.0039 | 77 | 42 | Acetone : O<br>DMF: O<br>$CHCl_3$: O |
| 37 | APB-3CF3<br>24.82<br>(0.050) | BPDA<br>14.42<br>(0.049) | MA<br>0.20<br>(0.002) | 0.52 | 280 | 207 | 534 | 1.58 | 0.0032 | 86 | 60 | Acetone : O<br>DMF: O<br>$CHCl_3$: O |
| 38 | Using the polyamic acid in Example 37 | | | | 300 | 208 | 533 | 1.58 | 0.0031 | 80 | 54 | Acetone : O<br>DMF: O<br>$CHCl_3$: O |
| 39 | Using the polyamic acid in Example 37 | | | | 320 | 209 | 535 | 1.58 | 0.0032 | 77 | 50 | Acetone : O<br>DMF: O<br>$CHCl_3$: O |
| 40 | m-BP<br>18.43<br>(0.050) | BPDA<br>14.42<br>(0.049) | MA<br>0.20<br>(0.002) | 0.65 | 280 | 234 | 548 | 1.70 | 0.0078 | 86 | 60 | Acetone : O<br>DMF: O<br>$CHCl_3$: O |
| 41 | Using the polyamic acid in Example 40 | | | | 300 | 235 | 550 | 1.70 | 0.0080 | 78 | 50 | Acetone : O<br>DMF: O<br>$CHCl_3$: O |
| 42 | Using the polyamic acid in Example 40 | | | | 320 | 235 | 548 | 1.70 | 0.0079 | 73 | 48 | Acetone : O<br>DMF: O<br>$CHCl_3$: O |

Solvent resistance: Left; test solvent, Right; evaluation (Visual observation; O: no changes, Δ: change in a shape, x: dissolved)

Table C1(3) (Continued)

| Ex. | Diamine g(mol) | Tetracarboxylic dianhydride g(mol) | Dicarboxylic anhydride g(mol) | $\eta_{inh}$ (dl/g) | Heating temp. (°C) | Tg (°C) | Td5 (°C) | n | Δn | T%500 (%) | T%420 (%) | Solvent resistance |
|---|---|---|---|---|---|---|---|---|---|---|---|---|
| 43 | MAPS 20.03 (0.050) | ODPA 15.20 (0.049) | MA 0.20 (0.002) | 0.50 | 280 | 179 | 520 | 1.69 | 0.0026 | 86 | 59 | Acetone : O<br>DMF: O<br>$CHCl_3$: O |
| 44 | Using the polyamic acid in Example 43 | | | | 300 | 180 | 521 | 1.69 | 0.0025 | 79 | 52 | Acetone : O<br>DMF: O<br>$CHCl_3$: O |
| 45 | Using the polyamic acid in Example 43 | | | | 320 | 179 | 519 | 1.69 | 0.0024 | 74 | 48 | Acetone : O<br>DMF: O<br>$CHCl_3$: O |
| 46 | m-BS 21.63 (0.050) | BPDA 14.42 (0.049) | MA 0.20 (0.002) | 0.65 | 280 | 241 | 530 | 1.68 | 0.0058 | 86 | 60 | Acetone : O<br>DMF: O<br>$CHCl_3$: O |
| 47 | Using the polyamic acid in Example 46 | | | | 300 | 241 | 529 | 1.68 | 0.0060 | 81 | 54 | Acetone : O<br>DMF: O<br>$CHCl_3$: O |
| 48 | Using the polyamic acid in Example 46 | | | | 320 | 241 | 529 | 1.68 | 0.0057 | 78 | 50 | Acetone : O<br>DMF: O<br>$CHCl_3$: O |
| 49 | m-BO 19.23 (0.050) | ODPA 15.20 (0.049) | MA 0.20 (0.002) | 0.43 | 280 | 184 | 508 | 1.67 | 0.0058 | 87 | 70 | Acetone : O<br>DMF: O<br>$CHCl_3$: O |
| 50 | Using the polyamic acid in Example 49 | | | | 300 | 185 | 507 | 1.67 | 0.0060 | 83 | 64 | Acetone : O<br>DMF: O<br>$CHCl_3$: O |
| 51 | Using the polyamic acid in Example 49 | | | | 320 | 185 | 510 | 1.67 | 0.0059 | 80 | 59 | Acetone : O<br>DMF: O<br>$CHCl_3$: O |
| 52 | m-BAPP 20.53 (0.050) | ODPA 15.20 (0.049) | MA 0.20 (0.002) | 0.56 | 280 | 204 | 515 | 1.66 | 0.0048 | 86 | 54 | Acetone : O<br>DMF: O<br>$CHCl_3$: O |
| 53 | Using the polyamic acid in Example 52 | | | | 300 | 204 | 513 | 1.66 | 0.0049 | 81 | 49 | Acetone : O<br>DMF: O<br>$CHCl_3$: O |

| | | | | | | | | | | | | |
|---|---|---|---|---|---|---|---|---|---|---|---|---|
| 54 | Using the polyamic acid in Example 52 | | | | 320 | 205 | 515 | 1.66 | 0.0050 | 77 | 46 | Acetone : O<br>DMF: O<br>$CHCl_3$: O |
| 55 | 6F-BAPP<br>25.93<br>(0.050) | ODPA<br>15.20<br>(0.049) | MA<br>0.20<br>(0.002) | 0.43 | 280 | 214 | 519 | 1.58 | 0.0034 | 87 | 63 | Acetone : O<br>DMF: O<br>$CHCl_3$: O |
| 56 | Using the polyamic acid in Example 55 | | | | 300 | 215 | 518 | 1.58 | 0.0033 | 82 | 58 | Acetone : O<br>DMF: O<br>$CHCl_3$: O |
| 57 | Using the polyamic acid in Example 55 | | | | 320 | 215 | 520 | 1.58 | 0.0035 | 79 | 56 | Acetone : O<br>DMF: O<br>$CHCl_3$: O |
| 58 | MAPS-CF3<br>26.83<br>(0.050) | ODPA<br>15.20<br>(0.049) | MA<br>0.20<br>(0.002) | 0.50 | 280 | 173 | 525 | 1.60 | 0.0062 | 85 | 60 | Acetone : O<br>DMF: O<br>$CHCl_3$: O |
| 59 | Using the polyamic acid in Example 58 | | | | 300 | 175 | 526 | 1.60 | 0.0061 | 77 | 54 | Acetone : O<br>DMF: O<br>$CHCl_3$: O |
| 60 | Using the polyamic acid in Example 58 | | | | 320 | 175 | 526 | 1.60 | 0.0062 | 74 | 51 | Acetone : O<br>DMF: O<br>$CHCl_3$: O |
| 61 | m-BS-CF3<br>28.43<br>(0.050) | ODPA<br>15.20<br>(0.049) | MA<br>0.20<br>(0.002) | 0.49 | 280 | 205 | 519 | 1.58 | 0.0063 | 84 | 47 | Acetone : O<br>DMF: O<br>$CHCl_3$: O |
| 62 | Using the polyamic acid in Example 61 | | | | 300 | 205 | 520 | 1.58 | 0.0062 | 78 | 42 | Acetone : O<br>DMF: O<br>$CHCl_3$: O |
| 63 | Using the polyamic acid in Example 61 | | | | 320 | 206 | 521 | 1.58 | 0.0064 | 73 | 38 | Acetone : O<br>DMF: O<br>$CHCl_3$: O |

Solvent resistance: Left; test solvent, Right; evaluation (Visual observation; O: no changes, Δ: change in a shape, x: dissolved)

Table C1(4) (Continued)

| Ex. | Diamine g(mol) | Tetracarboxylic dianhydride g(mol) | Dicarboxylic anhydride g(mol) | $\eta_{inh}$ (dl/g) | Heating temp. (°C) | Tg (°C) | Td5 (°C) | n | Δn | T%500 (%) | T%420 (%) | Solvent resistance |
|---|---|---|---|---|---|---|---|---|---|---|---|---|
| 64 | m-BO-CF3 26.03 (0.050) | ODPA 15.20 (0.049) | MA 0.20 (0.002) | 0.54 | 280 | 175 | 526 | 1.59 | 0.0063 | 86 | 66 | Acetone : O DMF: O $CHCl_3$: O |
| 65 | Using the polyamic acid in Example 64 | | | | 300 | 175 | 525 | 1.59 | 0.0061 | 81 | 60 | Acetone : O DMF: O $CHCl_3$: O |
| 66 | Using the polyamic acid in Example 64 | | | | 320 | 176 | 526 | 1.59 | 0.0062 | 77 | 57 | Acetone : O DMF: O $CHCl_3$: O |
| 67 | 6F-BAPP-CF3 32.73 (0.050) | BPDA 14.42 (0.049) | MA 0.20 (0.002) | 0.59 | 280 | 244 | 509 | 1.62 | 0.0069 | 86 | 43 | Acetone : O DMF: O $CHCl_3$: O |
| 68 | Using the polyamic acid in Example 67 | | | | 300 | 245 | 510 | 1.62 | 0.0068 | 78 | 35 | Acetone : O DMF: O $CHCl_3$: O |
| 69 | Using the polyamic acid in Example 67 | | | | 320 | 246 | 509 | 1.62 | 0.0068 | 70 | 32 | Acetone : O DMF: O $CHCl_3$: O |
| 70 | 3,3'-ODA 10.02 (0.050) | 6FDA 21.77 (0.049) | NCA 0.32 (0.002) | 0.32 | 300 | 237 | 505 | 1.61 | 0.0050 | 81 | 73 | Acetone : O DMF: O $CHCl_3$: O |
| 71 | Using the polyamic acid in Example 70 | | | | 320 | 238 | 505 | 1.61 | 0.0051 | 76 | 68 | Acetone : O DMF: O $CHCl_3$: O |
| 72 | Using the polyamic acid in Example 70 | | | | 340 | 239 | 505 | 1.61 | 0.0049 | 70 | 60 | Acetone : O DMF: O $CHCl_3$: O |
| 73 | 3,3'-ODA 10.02 (0.050) | 6FDA 21.77 (0.049) | EPA 0.34 (0.002) | 0.33 | 260 | 236 | 504 | 1.61 | 0.0050 | 87 | 80 | Acetone : O DMF: O $CHCl_3$: O |
| 74 | Using the polyamic acid in Example 73 | | | | 280 | 236 | 505 | 1.61 | 0.0049 | 82 | 75 | Acetone : O DMF: O $CHCl_3$: O |

| | | | | | | | | | | | |
|---|---|---|---|---|---|---|---|---|---|---|---|
| 75 | Using the polyamic acid in Example 73 | | | | 300 | 237 | 505 | 1.61 | 0.0050 | 79 | 72 | Acetone : O<br>DMF: O<br>$CHCl_3$: O |
| 76 | 3,3'-ODA<br>10.02<br>(0.050) | 6FDA<br>21.77<br>(0.049) | HPA<br>0.30<br>(0.002) | 0.33 | 280 | 237 | 505 | 1.61 | 0.0049 | 83 | 72 | Acetone : O<br>DMF: O<br>$CHCl_3$: O |
| 77 | Using the polyamic acid in Example 76 | | | | 300 | 238 | 504 | 1.61 | 0.0048 | 77 | 69 | Acetone : O<br>DMF: O<br>$CHCl_3$: O |
| 78 | Using the polyamic acid in Example 76 | | | | 320 | 238 | 505 | 1.61 | 0.0049 | 74 | 65 | Acetone : O<br>DMF: O<br>$CHCl_3$: O |
| 79 | 3,3'-ODA<br>10.02<br>(0.050) | 6FDA<br>21.77<br>(0.049) | MM-MA<br>0.22<br>(0.002) | 0.32 | 280 | 238 | 504 | 1.61 | 0.0048 | 82 | 72 | Acetone : O<br>DMF: O<br>$CHCl_3$: O |
| 80 | Using the polyamic acid in Example 79 | | | | 300 | 238 | 503 | 1.61 | 0.0047 | 76 | 63 | Acetone : O<br>DMF: O<br>$CHCl_3$: O |
| 81 | Using the polyamic acid in Example 79 | | | | 320 | 238 | 505 | 1.61 | 0.0049 | 72 | 58 | Acetone : O<br>DMF: O<br>$CHCl_3$: O |
| 82 | 3,3'-ODA<br>10.02<br>(0.050) | 6FDA<br>21.77<br>(0.049) | DM-MA<br>0.25<br>(0.002) | 0.30 | 280 | 237 | 505 | 1.61 | 0.0048 | 81 | 73 | Acetone : O<br>DMF: O<br>$CHCl_3$: O |
| 83 | Using the polyamic acid in Example 82 | | | | 300 | 238 | 503 | 1.61 | 0.0048 | 75 | 62 | Acetone : O<br>DMF: O<br>$CHCl_3$: O |
| 84 | Using the polyamic acid in Example 82 | | | | 320 | 238 | 504 | 1.61 | 0.0049 | 70 | 57 | Acetone : O<br>DMF: O<br>$CHCl_3$: O |

Solvent resistance: *Left*; test solvent, *Right*; evaluation (*Visual observation*; O: *no changes*, Δ: *change in a shape*, x: dissolved)

Table C2

| Comp. Ex. | Diamine g(mol) | Tetracarboxylic dianhydride g(mol) | Dicarboxylic anhydride g(mol) | $\eta_{inh}$ (dl/g) | Heating temp. (°C) | Tg (°C) | Td5 (°C) | n | Δn | T%500 (%) | T%420 (%) | Solvent resistance |
|---|---|---|---|---|---|---|---|---|---|---|---|---|
| 1 | 3,3'-ODA 10.02 (0.050) | BPDA 14.42 (0.049) | - | 0.70 | 280 | 239 | 545 | 1.71 | 0.0071 | 84 | 44 | Acetone : Δ DMF: Δ $CHCl_3$: × |
| 2 | Using the polyamic acid in Comparative Example 1 | | | | 320 | 240 | 545 | 1.71 | 0.0070 | 74 | 37 | Acetone : Δ DMF: Δ $CHCl_3$: × |
| 3 | 3,3'-ODA 10.02 (0.050) | BPDA 14.42 (0.049) | PA 0.30 (0.002) | 0.69 | 280 | 238 | 544 | 1.71 | 0.0071 | 85 | 45 | Acetone : Δ DMF: Δ $CHCl_3$: × |
| 4 | Using the polyamic acid in Comparative Example 3 | | | | 320 | 238 | 545 | 1.71 | 0.0070 | 74 | 38 | Acetone : Δ DMF: Δ $CHCl_3$: × |
| 5 | 3,3'-ODA 10.02 (0.050) | BPDA 14.42 (0.049) | MA 0.20 (0.002) | 0.68 | - | 238 | 545 | 1.71 | 0.0070 | 84 | 43 | Acetone : Δ DMF: Δ $CHCl_3$: × |
| 6 | Using the polyamic acid in Comparative Example 5 | | | | 360 | 240 | 544 | 1.71 | 0.0069 | 69 | 19 | Acetone : O DMF: O $CHCl_3$: O |
| 7 | 4,4'-ODA 10.02 (0.050) | ODPA 15.20 (0.049) | MA 0.20 (0.002) | 0.68 | - | 248 | 545 | 1.68 | 0.0519 | 84 | 32 | Acetone : Δ DMF: Δ $CHCl_3$: × |
| 8 | Using the polyamic acid in Comparative Example 7 | | | | 360 | 250 | 545 | 1.68 | 0.0520 | 59 | 0 | Acetone : O DMF: O $CHCl_3$: O |
| 9 | 4,4'-ODA 10.02 (0.050) | PMDA 10.69 (0.049) | MA 0.20 (0.002) | 0.80 | 280 | not detected | 552 | 1.67 | 0.1030 | 4 | 0 | Acetone : O DMF: O $CHCl_3$: O |
| 10 | Using the polyamic acid in Comparative Example 9 | | | | 320 | not detected | 550 | 1.67 | 0.1028 | 5 | 0 | Acetone : O DMF: O $CHCl_3$: O |

Solvent resistance: Left; test solvent, Right; evaluation (Visual observation; O: no changes, Δ: change in a shape, ×: dissolved)

In these Examples and Comparative Examples, the diamines, the tetracarboxylic dianhydrides, the dicarboxylic anhydride and the agents used are represented by the following abbreviations.

Diamines

3,3'-ODA: 3,3'-diaminodiphenyl ether;
4,4'-ODA: 4,4'-diaminodiphenyl ether;
4,4'-ClBP: 4,4'-diamino-2,2'-dichlorobiphenyl;
4,4'-CF3BP: 4,4'-diamino-2,2'-ditrifluoromethylbiphenyl;
3,3'-DAS: 3,3'-diaminodiphenylsulfone;
APB: 1,3-bis(3-aminophenoxy)benzene;
APB-CF3: 1,3-bis(3-aminophenoxy)-4-trifluoromethylbenzene;
APB-CN: 2,6-bis(3-aminophenoxy)benzonitrile;
APB-Cl: 1,3-bis(3-aminophenoxy)-5-chlorobenzene;
APB-2CF3: 1,3-bis(3-amino-5-trifluoromethylphenoxy)benzene;
APB-3CF3: 1,3-bis(3-amino-5-trifluoromethylphenoxy)-4-trifluoromethylbenzene;
m-BP: 4,4'-bis(3-aminophenoxy)biphenyl;
MAPS: bis[4-(3-aminophenoxy)phenyl]sulfide;
m-BS: bis[4-(3-aminophenoxy)phenyl]sulfone;
m-BO: bis[4-(3-aminophenoxy)phenyl] ether;
m-BAPP: 2,2-bis[4-(3-aminophenoxy)phenyl]propane;
6F-BAPP: 2,2-bis[3-(3-aminophenoxy)phenyl]-1,1,1,3,3,3-hexafluoropropane;
MAPS-CF3: bis[4-(3-amino-5-trifluoromethylphenoxy)phenyl]sulfide;
m-BS-CF3: bis[4-(3-amino-5-trifluoromethylphenoxy)phenyl]sulfone;
m-BO-CF3: bis[4-(3-amino-5-trifluoromethylphenoxy)phenyl] ether;
6F-BAPP-CF3: 2,2-bis[4-(4-amino-2-trifluoromethylphenoxy)phenyl]-1,1,1,3,3,3-hexafluoropropane.

Tetracarboxylic dianhydrides

BPDA: 3,3',4,4'-biphenyltetracarboxylic dianhydride;
ODPA: bis(3,4-dicarboxyphenyl) ether dianhydride;
6FDA: 2,2-bis(3,4-dicarboxyphenyl)-1,1,1,3,3,3-hexafluoropropane dianhydride;
PMDA: pyromellitic dianhydride.

Dicarboxylic anhydrides

MA: maleic anhydride;
NCA: 5-norbornene-2,3-dicarboxylic anhydride;
EPA: 6-ethynylphthalic anhydride;
HPA: cis-1,2,3,4-tetrahydrophthalic anhydride;
MM-MA: 2-methylmaleic anhydride;
DM-MA: 2,3-dimethylmaleic anhydride;
PA: phthalic anhydride.

These Examples and Comparative Examples indicate that a polyimide according to this invention exhibits better chemical resistance than any polyimide in Comparative Examples. Although heating beyond the heating-temperature range in this invention may improve chemical resistance, a light transmittance may be deteriorated, leading to performance problems. It can be seen that a polyimide according to this invention exhibits a higher light transmittance and an adequately low birefringence. Any of the polyimides according to this invention exhibits a glass transition temperature of 150 °C or higher and a 5 % weight-reduction temperature of 500 °C or higher, indicating that it is useful as a heat-resisting lens.

As described above, this invention can provide an optical component such as a polyimide optical lens, a

microlens, an intraocular lens and an optical filter exhibiting good physical properties inherent to a polyimide, i.e., heat resistance, mechanical properties, sliding properties, low water absorptivity, electric properties, thermal oxidation stability, chemical resistance and radiation resistance, in particular, significantly improved chemical resistance as well as good transparency, a high refractive index and a low birefringence.

Example D

In Examples A to C, it has been demonstrated by determining basic optical performance that a polyimide according to this invention can be used as a variety of optical components. Example D will prepare a specific optical component for evaluating its performance.

Example D1 (Intraocular lens)

In a vessel equipped with a stirrer, a nitrogen inlet tube and a thermometer were placed 50.45g of 4,4'-bis (3-amino-5-trifluoromethylphenoxy)biphenyl (0.100 mol) and 188.65 g of N,N-dimethylacetamide as a solvent, and the mixture was stirred under a nitrogen atmosphere for 30 min to prepare a solution. Then, 30.40g of 3,3',4,4'-diphenyl ether tetracarboxylic dianhydride (0.098 mol) was added in portions, taking care of temperature rise in the solution, and the mixture was stirred at room temperature for 6 hours to provide a polyamic acid with a logarithmic viscosity of 0.62 dl/g.

The polyamic acid varnish was applied on a glass plate using a doctor blade. It was heated at 100 °C for 1 hour, at 200 °C for 1 hour and at 250 °C for 1 hour to form a polyimide film with a thickness of 50 μm.

The polyimide film thus formed was punched using a punch with a diameter of 38 mm. Twenty pieces of the films were laminated and were subject to thermocompression forming at a temperature of 300 °C and a pressure of 98 MPa for 30 min to prepare a disk polyimide molding with a thickness of 1 mm. The molding was a homogeneous polyimide molding in which the films were completely fused each other.

The molding thus obtained was analyzed by ultraviolet and visible light spectrometry to give a cutoff (a wavelength at which a transmittance becomes zero) of 380 nm and an overall light transmittance of 78 %. Its specific gravity and refractive index were 1.35 and 1.64, respectively. After a pressure cooker test at 121 °C and 12 atm for 24 hours, no apparent changes were observed.

These results show that the polyimide can completely absorb UV rays in the range of 200 to 300 nm and is adequately transparent to transmit a majority of visible light in the range of 380 to 780 nm. When being transplanted in an eye, it can, therefore, protect a retina by absorbing and cutting harmful UV rays while providing an adequate eyesight because it is transparent in the visible light range. The transparent polyimide has a small specific gravity of 1.35 and a refractive index of 1.64 larger than that in a conventional PMMA. For the same degree, it can be thinner, that is, lighter by 30 to 50 % than a PMMA lens. Therefore, it is friendly to an eye when being transplanted into the eye. Furthermore, a lens in the intraocular lens is made of a colorless and transparent polyimide which is highly heat resistant, and it can be, therefore, easily sterilized using autoclave steam sterilization.

Example D2 (Intraocular lens)

A polyamic acid varnish was prepared as described in Example D1. Then, to the varnish was added 0.59 g of phthalic anhydride (0.004 mol), and the mixture was stirred for additional 6 hours to give a polyamic acid varnish with a logarithmic viscosity of 0.61 dl/g. The polyamic acid varnish was applied and dried as described in Example D1 to form a polyimide film with a thickness of 50 μm. Then, the film was molded as descried in Example D1 to provide a homogeneous polyimide molding with a thickness of 1 mm.

The molding thus obtained was analyzed by ultraviolet and visible light spectrometry to give a cutoff (a wavelength at which a transmittance becomes zero) of 380 nm and an overall light transmittance of 81 %. Its specific gravity and refractive index were 1.35 and 1.64, respectively. After a pressure cooker test at 121 °C and 12 atm for 24 hours, no apparent changes were observed.

The total light transmittance was improved by 3 % compared with the polyimide in Example D1 whose end was not capped. Thus, the polyimide with the same structure whose end was capped provided an intraocular lens with a further improved light transmittance.

Example D3 (Intraocular lens)

A polyamic acid varnish was prepared as described in Example D1. Then, to the varnish was added 0.39 g of maleic anhydride (0.004 mol), and the mixture was stirred for additional 6 hours to give a polyamic acid varnish with a logarithmic viscosity of 0.60 dl/g. The polyamic acid varnish was applied and dried as described in Example D1 to

form a polyimide film with a thickness of 50 µm. Then, the film was molded as descried in Example D1 to provide a homogeneous polyimide molding with a thickness of 1 mm.

The molding thus obtained was analyzed by ultraviolet and visible light spectrometry to give a cutoff (a wavelength at which a transmittance becomes zero) of 380 nm and an overall light transmittance of 80 %. Its specific gravity and refractive index were 1.35 and 1.64, respectively. After a pressure cooker test at 121 °C and 12 atm for 24 hours, no apparent changes were observed.

The polyimide molding was heated at 300 °C for 2 hours, immersed in DMF and chloroform, and then visually observed for its surface state. In any solvent, no changes were observed in the surface. After heating, it exhibited a refractive index of 1.64 and a total light transmittance of 76 %. On the other hand, the polyimide without heating at 300 °C was similarly immersed in DMF and chloroform, and its surface became cloudy.

These results indicate that a crosslinked polyimide molding produced by heating a polyimide whose end has been treated with a crosslinking end capping agent exhibits good solvent resistance.

<u>Example D4 (Color filter)</u>

In a vessel equipped with a stirrer, a nitrogen inlet tube and a thermometer were placed 36.03 g of 1,3-bis (3-aminophenoxy)-4-trifluoromethylbenzene (0.100 mol) and 151.34 g of N,N-dimethylacetamide, and the mixture was stirred under a nitrogen atmosphere for 30 min to prepare a solution. Then, 28.83 g of 3,3',4,4'-biphenyltetracarboxylic dianhydride (0.098 mol) was added in portions, taking care of temperature rise in the solution, and the mixture was stirred at room temperature for 6 hours to give a polyamic acid with a logarithmic viscosity of 0.69 dl/g.

Then, into a 250 mL polyethylene widemouthed bottle was transferred 100 g of the polyamic acid varnish thus obtained, to which was added 20 g of phthalocyanine blue powder, and the mixture was fully kneaded using three rollers to give a heat-resisting colored paste for a color filter. The varnish was applied on a glass plate using a doctor blade, and then was dried by heating under a nitrogen atmosphere at 100 °C for 1 hour, at 200 °C for 1 hour and at 250 °C for 1 hour, to give a test piece with a film thickness of about 10 µm on the glass plate. Visual observation of this sample indicated that it was a clear blue filter without clouding.

<u>Example D5 (Color filter)</u>

A polyamic acid varnish was prepared as described in Example D4. To the mixture was added 0.59 g of phthalic anhydride (0.004 mol), and the mixture was stirred for additional 6 hours to give a polyamic acid varnish with a logarithmic viscosity of 0.66 dl/g. As described in Example D4, the polyamic acid varnish was mixed with phthalocyanine powder and the mixture was used to give a heat-resisting colored paste for a color filter. The varnish was applied and dried as described in Example D4 to form a test piece with a thickness of about 10 µm on a glass plate.

Visual observation of this sample indicated that it was a clear blue filter without clouding.

<u>Example D6 (Color filter)</u>

A polyamic acid varnish was prepared as described in Example D4. To the mixture was added 0.39 g of maleic anhydride (0.004 mol), and the mixture was stirred for additional 6 hours to give a polyamic acid varnish with a logarithmic viscosity of 0.67 dl/g. As described in Example D4, the polyamic acid varnish was mixed with phthalocyanine powder and the mixture was used to give a heat-resisting colored paste for a color filter. The varnish was applied and dried as described in Example D4 to form a test piece with a thickness of about 10 µm on a glass plate.

The polyimide molding was heated at 280 °C for 2 hours, immersed in DMF and chloroform, and then visually observed for its surface state. In any solvent, no changes were observed in the surface.

On the other hand, the color filter without heating at 280 °C was similarly immersed in DMF and chloroform, and its surface became cloudy.

These results indicate that a crosslinked polyimide produced by heating a polyimide whose end has been treated with a crosslinking end capping agent exhibits good solvent resistance.

<u>Example D7 (Microlens)</u>

In a vessel equipped with a stirrer, a nitrogen inlet tube and a thermometer were placed 36.85 g of 4,4'-bis (3-aminophenoxy)biphenyl (0.100 mol) and 156.92 g of N,N-dimethylacetamide, and the mixture was stirred under a nitrogen atmosphere for 30 min to prepare a solution. Then, 30.40 g of 3,3',4,4'-diphenyl ether tetracarboxylic dianhydride (0.098 mol) was added in portions, taking care of temperature rise in the solution, and the mixture was stirred at room temperature for 6 hours to give a polyamic acid with a logarithmic viscosity of 0.52 dl/g.

The polyamic acid varnish was applied on a glass plate with a number of semispherical and concave cavities

with a diameter of 30 µm using a doctor blade, and it was dried by heating at 100 °C for 1 hour, 200 °C for 1 hour and 250 °C for 1 hour to give a glass substrate with polyimide as a microlens.

The microlens thus obtained had a refractive index of 1.68, a light transmission of 65 % at 420 nm and a light transmission of 90 % or more at 500 to 700 nm, and had a good shape.

Example D8 (Microlens)

A polyamic acid varnish was prepared as described in Example D7. To the mixture was added 0.59 g of phthalic anhydride (0.004 mol), and the mixture was stirred for additional 6 hours to give a polyamic acid varnish with a logarithmic viscosity of 0.51 dl/g. As described in Example D7, the polyamic acid varnish was used to prepare a glass substrate with a polyimide as a microlens.

The microlens thus obtained had a refractive index of 1.68, a light transmission of 68 % at 420 nm and a light transmission of 90 % or more at 500 to 700 nm, and had a good shape. A light transmittance at 420 nm was improved by 3 % compared with the polyimide in Example D7 whose end was not capped. Thus, the polyimide with the same structure whose end was capped provided a microlens with a further improved light transmittance.

Example D9 (Microlens)

A polyamic acid varnish was prepared as described in Example D7. To the mixture was added 0.39 g of maleic anhydride (0.004 mol), and the mixture was stirred for additional 6 hours. As described in Example D7, the polyamic acid varnish was used to prepare a glass substrate with a polyimide as a microlens. The microlens thus obtained had a refractive index of 1.68, a light transmission of 65 % at 420 nm and a light transmission of 90 % or more at 500 to 700 nm, and had a good shape.

The glass substrate with a microlens was heated at 300 °C for 2 hours, immersed in DMF and chloroform, and then visually observed for its surface state. In any solvent, no changes were observed in the surface. The microlens thus obtained had a refractive index of 1.68, a light transmission of 63 % at 420 nm and a light transmission of 88 % or more at 500 to 700 nm, and had a good shape. On the other hand, the glass substrate with a microlens without heating at 300 °C was similarly immersed in DMF and chloroform, and its surface became cloudy.

These results indicate that a crosslinked polyimide produced by heating a polyimide whose end has been treated with a crosslinking end capping agent exhibits good solvent resistance.

**Claims**

**1.** An optical component prepared using a polyimide resin essentially comprising a structural motif represented by general formula (1):

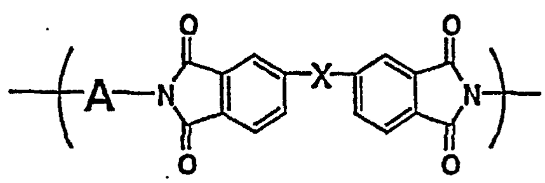

(1)

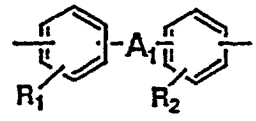

(2)

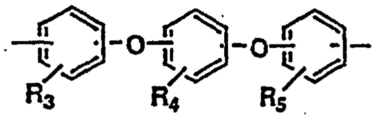

(3)

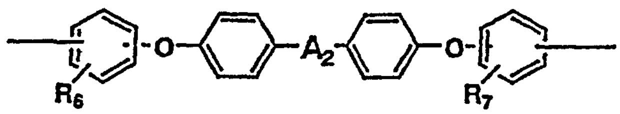 (4)

wherein in general formula (1), A represents general formula (2), (3) or (4); X represents a direct bond, -O-, $-SO_2-$ or $-C(CF_3)_2-$;

in general formula (2), $A_1$ represents a direct bond, -O-, -S-, $-SO_2-$, -CO-, $-C(CH_3)_2-$ or $-C(CF_3)_2-$; and in general formula (2) $R_1$ and $R_2$ independently represent H, Cl, Br, $CH_3$ or $CF_3$;
in general formula (3), $R_3$, $R_4$ and $R_5$ independently represent H, Cl, Br, CN, $CH_3$ or $CF_3$;
in general formula (4), $A_2$ represents a direct bond, -O-, -S-, $-SO_2-$, -CO-, $-C(CH_3)_2-$ or $-C(CF_3)_2-$; and in general formula (4), $R_6$ and $R_7$ represent H or $CF_3$.

**2.** The optical component as claimed in Claim 1 comprising the polyimide resin represented by general formula (1) in Claim 1 whose polymer end is capped with a structure represented by general formula (5) or (6):

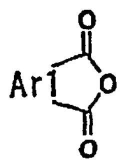 (5)

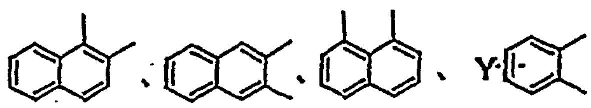 (I)

H−、F−、Cl−、Br−、NO2−、CN−、CH3−、CF3−、CH3O−
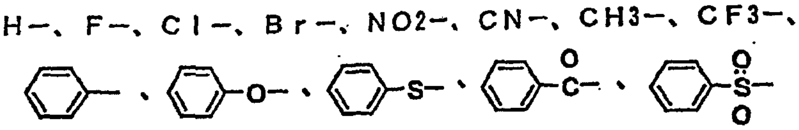 (II)

$$Ar2—NH_2 \quad (6)$$

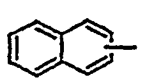 or 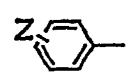 (III)

H−、F−、Cl−、Br−、NO2−、CN−、CH3−、CF3−、CH3O−
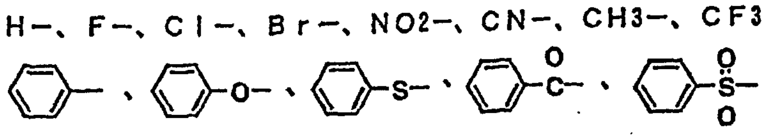 (IV)

wherein in general formula (5), Ar1 is selected from the group in formula (I); and Y is selected from the group in formula (II);
in general formula (6), Ar2 is selected from the group in formula (III); and Z is selected from the group in formula (IV).

**3.** The optical component as claimed in Claim 1 comprising the polyimide resin represented by general formula (1) in Claim 1 whose polymer end is capped with a structure represented by general formula (7) or (8), to which a crosslinking structure can be introduced:

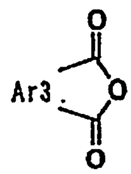 (7)

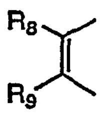 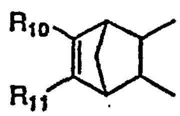 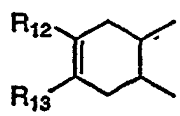 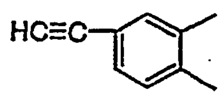 (V)

Ar4-NH2 (8)

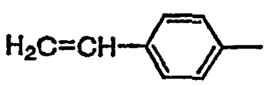 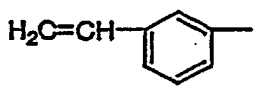 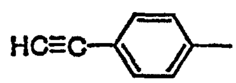 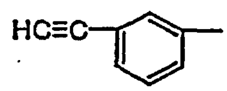 (VI)

wherein in. general formula (7), Ar3 is selected from the group in formula (V);

in formula (V), $R_8$ to $R_{13}$ may be the same or different and independently represent H, F, $CF_3$, $CH_3$, $C_2H_5$ or phenyl;
in general formula (8), Ar4 is selected from the group in formula (VI).

**4.** The optical component as claimed in any of Claims 1 to 3 wherein the optical component is a microlens.

**5.** The optical component as claimed in Claim 3 wherein the optical component is selected from the group consisting of an optical lens, an intraocular lens and a microlens.

**6.** An optical component prepared using a polyimide resin essentially comprising a structural motif represented by general formula (9):

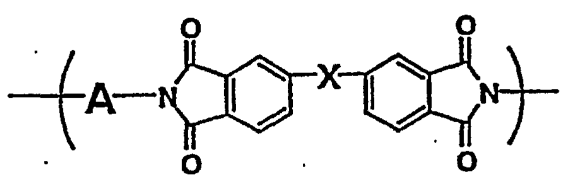 (9)

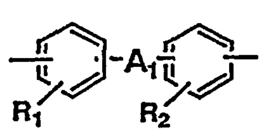 (10)

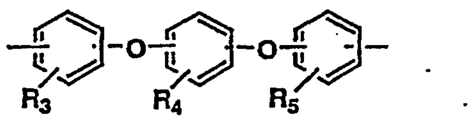

(11)

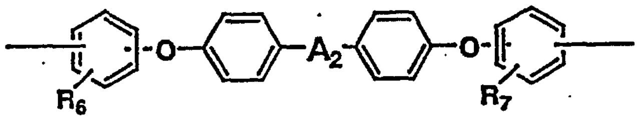

(12)

wherein in general formula (9), A represents general formula (10), (11) or (12); X represents a direct bond, -O-, $-SO_2-$ or $-C(CF_3)_2-$;

in general formula (10), $A_1$ represents a direct bond, -O-, -S-, $-SO_2-$, -CO-, $-C(CH_3)_2-$ or $-C(CF_3)_2-$; and in general formula (10) $R_1$ and $R_2$ independently represent Cl, Br, $CH_3$ or $CF_3$;
in general formula (11), $R_3$, $R_4$ and $R_5$ independently represent H, Cl, Br, CN, $CH_3$ or $CF_3$; and at least one of $R_3$, $R_4$ and $R_5$ represents a group other than H;
in general formula (12), $A_2$ represents a direct bond, -O-, -S-, $-SO_2-$, -CO-, $-C(CH_3)_2-$ or $-C(CF_3)_2-$; and in general formula (12), $R_6$ and $R_7$ represent $CF_3$.

**7.** The optical component as claimed in Claim 6 wherein the optical component is selected from the group consisting of an optical lens, a microlens, an intraocular lens and an optical filter.

**8.** An optical component selected from the group consisting of an optical lens, a microlens, an intraocular lens and an optical filter produced using a polyimide resin having the structure described in Claims 2 and/or 3 wherein at least one of $R_3$, $R_4$ and $R_5$ represents a group other than H.

## INTERNATIONAL SEARCH REPORT

International application No.
PCT/JP01/06820

A. CLASSIFICATION OF SUBJECT MATTER
Int.Cl[7] G02B1/04, G02C7/04, C08G73/10, A61F2/16

According to International Patent Classification (IPC) or to both national classification and IPC

B. FIELDS SEARCHED

Minimum documentation searched (classification system followed by classification symbols)
Int.Cl[7] G02B1/04, G02C7/04, C08G73/10, A61F2/16

Documentation searched other than minimum documentation to the extent that such documents are included in the fields searched
Jitsuyo Shinan Koho 1926-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-78031 A (Shin-Etsu Chemical Co., Ltd.),<br>25 March, 1997 (25.03.97),<br>Full text; all drawings<br>(Family: none) | 6,7<br>2,8 |
| X<br>Y | EP 695955 A2 (Mitsui Toatsu Chemicals, Inc.),<br>07 February, 1996 (07.02.96),<br>Full text; all drawings<br>& JP 8-100122 A<br>Full text; all drawings<br>& US 5868968 A & US 5916488 A<br>& KR 200199 B1 | 1,6,7<br>2,8 |
| X<br>Y | EP 592228 A1 (Menicon Co., Ltd.),<br>13 April, 1994 (13.04.94),<br>Full text; all drawings<br>& JP 6-190942 A<br>Full text; all drawings<br>& US 5397511 A & DE 69328530 E | 1<br>2,8 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 November, 2001 (06.11.01) | Date of mailing of the international search report<br>13 November, 2001 (13.11.01) |
| Name and mailing address of the ISA/<br>Japanese Patent Office | Authorized officer |
| Facsimile No. | Telephone No. |

## INTERNATIONAL SEARCH REPORT

International application No.
PCT/JP01/06820

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 4-13763 A (Toray Industries, Inc.),<br>17 January, 1992 (17.01.92),<br>Full text<br>(Family: none) | 1,4<br>2,8 |
| X<br>Y | EP 454590 A2 (Nippon Telegraph and Telephone Corporation),<br>30 November, 1991 (30.11.91),<br>Full text; all drawings<br>& JP 4-8734 A<br>Full text<br>& CA 2041133 A & US 5108201 A<br>& DE 69120464 E | 1,6<br>2,4,5,7 |
| X<br>Y | JP 2000-95862 A (Nippon Telegr. & Teleph. Corp. <NTT>),<br>04 April, 2000 (04.04.00),<br>Full text; all drawings<br>(Family: none) | 1,4,5,6,7<br>2,8 |
| A | JP 11-106503 A (Mitsui Chemicals, Ltd.),<br>20 April, 1999 (20.04.99),<br>Full text<br>(Family: none) | 3,5,8 |